(19) Europäisches Patentamt
European Patent Office
Office européen des brevets

(11) EP 4 651 490 A1

(12) **EUROPEAN PATENT APPLICATION**
published in accordance with Art. 153(4) EPC

(43) Date of publication:
**19.11.2025 Bulletin 2025/47**

(21) Application number: **24741693.6**

(22) Date of filing: **10.01.2024**

(51) International Patent Classification (IPC):
***H04N 19/573*** *(2014.01)* ***H04N 19/105*** *(2014.01)*
***H04N 19/114*** *(2014.01)* ***H04N 19/70*** *(2014.01)*
***H04N 19/597*** *(2014.01)*

(52) Cooperative Patent Classification (CPC):
**H04N 19/105; H04N 19/114; H04N 19/573; H04N 19/597; H04N 19/70**

(86) International application number:
**PCT/KR2024/000470**

(87) International publication number:
**WO 2024/151072 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.01.2023 KR 20230003273**

(71) Applicant: **LG Electronics Inc.**
**Yeongdeungpo-gu**
**Seoul 07336 (KR)**

(72) Inventors:
- **HUR, Hyejung**
  **Seoul 06772 (KR)**
- **PARK, Yousun**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

# (54) POINT CLOUD DATA TRANSMISSION DEVICE, POINT CLOUD DATA TRANSMISSION METHOD, POINT CLOUD DATA RECEPTION DEVICE, AND POINT CLOUD DATA RECEPTION METHOD

(57) A point cloud data transmission method according to embodiments may comprise the steps of: encoding point cloud data; and transmitting a bitstream including the point cloud data. A point cloud data reception method according to embodiments may comprise the steps of: receiving a bitstream including point cloud data; and decoding the point cloud data.

FIG. 1

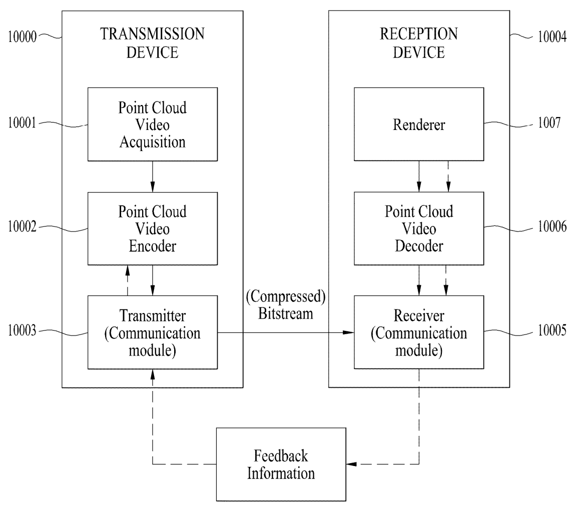

## Description

[Technical Field]

Embodiments relate to a method and device for processing point cloud content.

[Background Art]

Point cloud content is content represented by a point cloud, which is a set of points belonging to a coordinate system representing a three-dimensional space. The point cloud content may express media configured in three dimensions, and is used to provide various services such as virtual reality (VR), augmented reality (AR), mixed reality (MR), and self-driving services. However, tens of thousands to hundreds of thousands of point data are required to represent point cloud content. Therefore, there is a need for a method for efficiently processing a large amount of point data.

[Disclosure]

[Technical Problem]

Embodiments provide a device and method for efficiently processing point cloud data. Embodiments provide a point cloud data processing method and device for addressing latency and encoding/decoding complexity.

The technical scope of the embodiments is not limited to the aforementioned technical objects, and may be extended to other technical objects that may be inferred by those skilled in the art based on the entire contents disclosed herein.

[Technical Solution]

In one aspect of the present disclosure, a method of transmitting point cloud data may include encoding point cloud data, and transmitting a bitstream containing the point cloud data. In another aspect of the present disclosure, a method of receiving point cloud data may include receiving a bitstream containing point cloud data, and decoding the point cloud data.

[Advantageous Effects]

Devices and methods according to embodiments may process point cloud data with high efficiency.

The devices and methods according to the embodiments may provide a high-quality point cloud service.

The devices and methods according to the embodiments may provide point cloud content for providing general-purpose services such as a VR service and a self-driving service.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts.

FIG. 1 shows an exemplary point cloud content providing system according to embodiments;
FIG. 2 is a block diagram illustrating a point cloud content providing operation according to embodiments;
FIG. 3 illustrates an exemplary point cloud encoder according to embodiments;
FIG. 4 shows an example of an octree and occupancy code according to embodiments;
FIG. 5 illustrates an example of point configuration in each LOD according to embodiments;
FIG. 6 illustrates an example of point configuration in each LOD according to embodiments;
FIG. 7 illustrates a point cloud decoder according to embodiments;
FIG. 8 illustrates a transmission device according to embodiments;
FIG. 9 illustrates a reception device according to embodiments;
FIG. 10 illustrates an exemplary structure operable in connection with point cloud data transmission/reception methods/devices according to embodiments;

FIG. 11 illustrates an I-frame and P-frames in each Group of Frames (GoF) according to embodiments;
FIG. 12 illustrates a context continuity-based encoding and decoding method according to embodiments;
FIG. 13 illustrates a context continuity-based encoding and decoding method according to embodiments;
FIG. 14 illustrates a context continuity-based encoding and decoding method according to embodiments;
FIG. 15 illustrates the relationship between context correlation flags according to embodiments;
FIGS. 16A and 16B illustrate a point cloud data encoding device according to embodiments;
FIGS. 17A and 17B illustrate a point cloud data decoding device according to embodiments;
FIG. 18 illustrates a bitstream containing point cloud data and parameters according to embodiments;
FIG. 19 illustrates a sequence parameter set (SPS) in a bitstream according to embodiments;
FIG. 20 illustrates a tile parameter set (TPS) in a bitstream according to embodiments;
FIG. 21 illustrates a geometry parameter set (GPS) in a bitstream according to embodiments;
FIG. 22 illustrates an attribute parameter set (APS) in a bitstream according to embodiments;
FIG. 23 illustrates a geometry slice header (GSH) in a bitstream according to embodiments;
FIG. 24 illustrates a method of encoding point cloud data according to embodiments; and
FIG. 25 illustrates a method of decoding point cloud data according to embodiments.

[Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquirer 10001, a point cloud video encoder 10002, and/or a transmitter (or communication module) 10003.

The point cloud video acquirer 10001 according to the embodiments acquires a point cloud video through a processing process such as capture, synthesis, or generation. The point cloud video is point cloud content represented by a point cloud, which is a set of points positioned in a 3D space, and may be referred to as point cloud video data, point cloud data, or the like. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (e.g., a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (e.g., a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (e.g., in a reverse process of the operation of the point cloud video encoder 10002). Accordingly, the point cloud video decoder 10006 may decode the point cloud video data by performing point cloud decompression coding, which is the reverse process to the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The point cloud content providing system may process (encode/decode) point cloud data based on the feedback information. Accordingly, the point cloud video data decoder 10006 may perform a decoding operation based on the feedback information. The reception device 10004 may transmit the feedback information to the transmission device 10000. The transmission device 10000 (or the point cloud video data encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, or the like, and the reception device 10004 may be called a decoder, a receiving device, a receiver, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (e.g., the point cloud transmission device 10000 or the point cloud video acquirer 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (e.g., values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, position information, position data, or the like, and the attribute may be called attributes, attribute information, attribute data, or the like. The point cloud content providing system (e.g., the point cloud transmission device 10000 or the point cloud video acquirer 10001) may secure point cloud data from information (e.g., depth information, color information, etc.) related to the acquisition process of the point cloud video.

The point cloud content providing system (e.g., the transmission device 10000 or the point cloud video encoder 10002) according to the embodiments may encode the point cloud data (20001). The point cloud content providing system may encode the point cloud data based on point cloud compression coding. As described above, the point cloud data may include the geometry information and attribute information about a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (e.g., the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (e.g., signaling information related to the geometry encoding and the attribute encoding). The point cloud content providing system may encapsulate a bitstream that carries the encoded point cloud data and transmit the same in the form of a file or segment.

The point cloud content providing system (e.g., the reception device 10004 or the receiver 10005) according to the embodiments may receive the bitstream containing the encoded point cloud data. In addition, the point cloud content providing system (e.g., the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (e.g., the reception device 10004 or the point cloud video decoder 10005) may decode the point cloud video data based on the signaling information related to encoding of the point cloud video data contained in the bitstream. The point cloud content providing system (e.g., the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (e.g., the reception device 10004 or the point cloud video decoder 10005) may reconstruct the point cloud video based on the positions according to the reconstructed geometry and the decoded attributes.

The point cloud content providing system according to the embodiments (e.g., the reception device 10004 or the renderer 10007) may render the decoded point cloud data (20004). The point cloud content providing system (e.g., the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (e.g., the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus a detailed description thereof is omitted.

FIG. 3 illustrates an exemplary point cloud encoder according to embodiments.

FIG. 3 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud encoder may perform geometry encoding and attribute encoding. The geometry encoding is performed before the attribute encoding.

The point cloud encoder according to the embodiments includes a coordinate transformer (Transform coordinates) 30000, a quantizer (Quantize and remove points (voxelize)) 30001, an octree analyzer (Analyze octree) 30002, and a surface approximation analyzer (Analyze surface approximation) 30003, an arithmetic encoder (Arithmetic encode) 30004, a geometry reconstructor (Reconstruct geometry) 30005, a color transformer (Transform colors) 30006, an attribute transformer (Transform attributes) 30007, a RAHT transformer (RAHT) 30008, an LOD generator (Generate LOD) 30009, a lifting transformer (Lifting) 30010, a coefficient quantizer (Quantize coefficients) 30011, and/or an arithmetic encoder (Arithmetic encode) 30012.

The coordinate transformer 30000, the quantizer 30001, the octree analyzer 30002, the surface approximation analyzer 30003, the arithmetic encoder 30004, and the geometry reconstructor 30005 may perform geometry encoding. The geometry encoding according to the embodiments may include octree geometry coding, predictive tree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 30000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 30001 according to the embodiments quantizes the geometry. For example, the quantizer 30001 may quantize the points based on a minimum position value of all points (e.g., a minimum value on each of the X, Y, and Z axes). The quantizer 30001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 30001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 30001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 30002 according to the embodiments performs octree geometry coding (or octree coding) to present voxels in an octree structure. The octree structure represents points matched with voxels, based on the octal tree structure.

The surface approximation analyzer 30003 according to the embodiments may analyze and approximate the octree. The octree analysis and approximation according to the embodiments is a process of analyzing a region containing a plurality of points to efficiently provide octree and voxelization.

The arithmetic encoder 30004 according to the embodiments performs entropy encoding on the octree and/or the approximated octree. For example, the encoding scheme includes arithmetic encoding. As a result of the encoding, a geometry bitstream is generated.

The color transformer 30006, the attribute transformer 30007, the RAHT transformer 30008, the LOD generator 30009, the lifting transformer 30010, the coefficient quantizer 30011, and/or the arithmetic encoder 30012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 30006 according to the embodiments performs color transform coding of transforming color values (or textures) included in the attributes. For example, the color transformer 30006 may transform the format of color information (for example, from RGB to YCbCr). The operation of the color transformer 30006 according to embodiments may be optionally applied according to the color values included in the attributes.

The geometry reconstructor 30005 according to the embodiments reconstructs (decompresses) the octree and/or the approximated octree. The geometry reconstructor 30005 reconstructs the octree/voxels based on the result of analyzing the distribution of points. The reconstructed octree/voxels may be referred to as reconstructed geometry (restored geometry).

The attribute transformer 30007 according to the embodiments performs attribute transformation to transform the attributes based on the reconstructed geometry and/or the positions on which geometry encoding is not performed. As described above, since the attributes are dependent on the geometry, the attribute transformer 30007 may transform the attributes based on the reconstructed geometry information. For example, based on the position value of a point included in a voxel, the attribute transformer 30007 may transform the attribute of the point at the position. As described above, when the position of the center of a voxel is set based on the positions of one or more points included in the voxel, the attribute transformer 30007 transforms the attributes of the one or more points. When the trisoup geometry encoding is performed, the attribute transformer 30007 may transform the attributes based on the trisoup geometry encoding.

The attribute transformer 30007 may perform the attribute transformation by calculating the average of attributes or attribute values of neighboring points (e.g., color or reflectance of each point) within a specific position/radius from the position (or position value) of the center of each voxel. The attribute transformer 30007 may apply a weight according to the distance from the center to each point in calculating the average. Accordingly, each voxel has a position and a calculated attribute (or attribute value).

The attribute transformer 30007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 30007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 30009.

The RAHT transformer 30008 according to the embodiments performs RAHT coding for predicting attribute information based on the reconstructed geometry information. For example, the RAHT transformer 30008 may predict attribute information of a node at a higher level in the octree based on the attribute information associated with a node at a lower level in the octree.

The LOD generator 30009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 30010 according to the embodiments performs lifting transform coding of transforming the attributes a point cloud based on weights. As described above, lifting transform coding may be optionally applied.

The coefficient quantizer 30011 according to the embodiments quantizes the attribute-coded attributes based on coefficients.

The arithmetic encoder 30012 according to the embodiments encodes the quantized attributes based on arithmetic coding.

Although not shown in the figure, the elements of the point cloud encoder of FIG. 3 may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder of FIG. 3 described above. Additionally, the one or more processors may operate or execute a set of software programs and/or instructions for performing the operations and/or functions of the elements of the point cloud encoder of FIG. 3. The one or more memories according to the embodiments may include a high speed random access memory, or include a non-volatile memory (e.g., one or more magnetic disk storage devices, flash memory devices, or other non-volatile solid-state memory devices).

FIG. 4 shows an example of an octree and occupancy code according to embodiments.

As described with reference to FIGS. 1 to 3, the point cloud content providing system (point cloud video encoder 10002) or the point cloud encoder (e.g., the octree analyzer 30002) performs octree geometry coding (or octree coding) based on an octree structure to efficiently manage the region and/or position of the voxel.

The upper part of FIG. 4 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles (0, 0, 0) and ($2^d$, $2^d$, $2^d$). Here, 2d may be set to a value constituting the smallest bounding box surrounding all points of the point cloud content (or point cloud video). Here, d denotes the depth of the octree. The value of d is determined in the following equation. In the following equation, ($x^{int}_n$, $y^{int}_n$, $z^{int}_n$) denotes the positions (or position values) of quantized points.

$$d=Ceil(Log2(Max(x_n\hat{}int,y_n\hat{}int,z_n\hat{}in,n=1,\ldots,N)+1))$$

As shown in the middle of the upper part of FIG. 4, the entire 3D space may be divided into eight spaces according to partition. Each divided space is represented by a cube with six faces. As shown in the upper right of FIG. 4, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 4 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 4 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (e.g., the arithmetic encoder 30004) according to the embodiments may perform entropy encoding on the occupancy codes. In order to increase the compression efficiency, the point cloud encoder may perform intra/inter-coding on the occupancy codes. The reception device (e.g., the reception device 10004 or the point cloud video decoder 10006) according to the embodiments reconstructs the octree based on the occupancy codes.

The point cloud encoder (e.g., the point cloud encoder of FIG. 4 or the octree analyzer 30002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 30004) according to the embodiments may perform entropy coding on the positions (or position values) of the points.

The point cloud encoder (e.g., the surface approximation analyzer 30003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector (Δx, Δy, Δz) of the edge, and the vertex position value (relative position value within the edge). When the trisoup geometry encoding is applied, the point cloud encoder according to the embodiments (e.g., the geometry reconstructor 30005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction.

$$① \begin{bmatrix} \mu_x \\ \mu_y \\ \mu_z \end{bmatrix} = \frac{1}{n} \sum_{i=1}^{n} \begin{bmatrix} x_i \\ y_i \\ z_i \end{bmatrix} \quad ② \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix} \quad ③ \begin{bmatrix} \sigma_x^2 \\ \sigma_y^2 \\ \sigma_z^2 \end{bmatrix} = \sum_{i=1}^{n} \begin{bmatrix} \bar{x}_i^2 \\ \bar{y}_i^2 \\ \bar{z}_i^2 \end{bmatrix}$$

The minimum value of the sum is estimated, and the projection process is performed according to the axis with the minimum value. For 'example, when the element x is the minimum, each vertex is projected on the x-axis with respect to the center of the block, and projected on the (y, z) plane. When the values obtained through projection on the (y, z) plane are (ai, bi), the value of θ is estimated through atan2(bi, ai), and the vertices are ordered based on the value of θ. The table below shows a combination of vertices for creating a triangle according to the number of the vertices. The vertices are ordered from 1 to n. The table below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

TABEL 2-1. Triangles formed from vertices ordered 1,...,n

| n | triangles |
|---|---|
| 3 | (1,2,3) |
| 4 | (1,2,3), (3,4,1) |
| 5 | (1,2,3), (3,4,5), (5,1,3) |
| 6 | (1,2,3), (3,4,5), (5,6,1), (1,3,5) |
| 7 | (1,2,3), (3,4,5), (5,6,7), (7,1,3), (3,5,7) |

(continued)

| n | triangles |
|---|---|
| 8 | (1,2,3), (3,4,5), (5,6,7), (7,8,1), (1,3,5), (5,7,1) |
| 9 | (1,2,3), (3,4,5), (5,6,7), (7,8,9), (9,1,3), (3,5,7), (7,9,3) |
| 10 | (1,2,3), (3,4,5), (5,6,7), (7,8,9), (9,10,1), (1,3,5), (5,7,9), (9,1,5) |
| 11 | (1,2,3), (3,4,5), (5,6,7), (7,8,9), (9,10,11), (11,1,3), (3,5,7), (7,9,11), (11,3,7) |
| 12 | (1,2,3), (3,4,5), (5,6,7), (7,8,9), (9,10,11), (11,12,1), (1,3,5), (5,7,9), (9,11,1), (1,5,9) |

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

FIG. 5 illustrates an example of point configuration in each LOD according to embodiments.

As described with reference to FIGS. 1 to 4, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (e.g., the LOD generator 30009) may classify (or reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

FIG. 6 illustrates an example of point configuration for each LOD according to embodiments.

As described with reference to FIGS. 1 to 5, the point cloud content providing system, or the point cloud encoder (e.g., the point cloud video encoder 10002, the point cloud encoder of FIG. 3, or the LOD generator 30009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 6 shows examples (P0 to P9) of points of the point cloud content distributed in a 3D space. In FIG. 6, the original order represents the order of points P0 to P9 before LOD generation. In FIG. 6, the LOD based order represents the order of points according to the LOD generation. Points are reorganized by LOD. Also, a high LOD contains the points belonging to lower LODs. As shown in FIG. 6, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 3, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (e.g., the coefficient quantizer 30011) may quantize and inversely quantize the residuals (which may be called residual attributes, residual attribute values, or attribute prediction residuals, attribute residuals) obtained by subtracting a predicted attribute (attribute value) from the attribute (attribute value) of each point. The quantization process is configured as shown in the following table.

TABLE Attribute prediction residuals quantization pseudo code

```
int PCCQuantization(int value, int quantStep) {
if( value >=0) {
return floor(value / quantStep + 1.0 / 3.0);
} else {
```

(continued)

```
return -floor(-value / quantStep + 1.0 / 3.0);
}
}
```

TABLE Attribute prediction residuals inverse quantization pseudo code

```
int PCCInverseQuantization(int value, int quantStep) {
if( quantStep ==0) {
return value;
} else {
return value * quantStep;
}
}
```

When the predictor of each point has neighbor points, the point cloud encoder (e.g., the arithmetic encoder 30012) according to the embodiments may perform entropy coding on the quantized and inversely quantized residual values as described above. When the predictor of each point has no neighbor point, the point cloud encoder according to the embodiments (e.g., the arithmetic encoder 30012) may perform entropy coding on the attributes of the corresponding point without performing the above-described operation.

The point cloud encoder according to the embodiments (e.g., the lifting transformer 30010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.
2) Lift prediction process: Subtract the value obtained by multiplying the attribute value of the point by the weight from the existing attribute value to calculate a predicted attribute value.
3) Create temporary arrays called updateweight and update and initialize the temporary arrays to zero.
4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.
5) Lift update process: Divide the attribute values of the update array for all predictors by the weight value of the updateweight array of the predictor index, and add the existing attribute value to the values obtained by the division.
6) Calculate predicted attributes by multiplying the attribute values updated through the lift update process by the weight updated through the lift prediction process (stored in the QW) for all predictors. The point cloud encoder (e.g., coefficient quantizer 30011) according to the embodiments quantizes the predicted attribute values. In addition, the point cloud encoder (e.g., the arithmetic encoder 30012) performs entropy coding on the quantized attribute values.

The point cloud encoder (for example, the RAHT transformer 30008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{l\ x,y,z}$ denotes the average attribute value of voxels at level l. $g_{l\ x,y,z}$ may be calculated based on $g_{l+1\ 2x,y,z}$ and $g_{l+1\ 2x+1,y,z}$. The weights for $g_{l\ 2x,y,z}$ and $g_{l\ 2x+1,y,z}$ are $w1 = w_{l\ 2x,y,z}$ and $w2 = w_{l\ 2x+1,y,z}$.

$$\begin{bmatrix} g_{l-1\,x,y,z} \\ h_{l-1_{x,y,z}} \end{bmatrix} = T_{w1\,w2} \begin{bmatrix} g_{l\,2x,y,z} \\ g_{l_{2x+1,y,z}} \end{bmatrix}, \quad T_{w1\,w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1\,x,y,z}$ is a low-pass value and is used in the merging process at the next higher level. $h_{l-1\,x,y,z}$ denotes high-pass coefficients. The high-pass coefficients at each step are quantized and subjected to entropy coding (e.g., encoding by the arithmetic encoder 300012). The weights are calculated as $w_{l-1\,x,y,z} = w_{l\,2x,y,z} + w_{l\,2x+1,y,z}$. The root node is created through the $g_{1\,0,0,0}$ and $g_{1\,0,0,1}$ as follows.

$$\begin{bmatrix} gDC \\ h_{0_{0,0,0}} \end{bmatrix} = T_{w1000\,w1001} \begin{bmatrix} g_{1\,0,0,0z} \\ g_{1_{0,0,1}} \end{bmatrix}$$

The value of gDC is also quantized and subjected to entropy coding like the high-pass coefficients.

FIG. 7 illustrates a point cloud decoder according to embodiments.

The point cloud decoder illustrated in FIG. 7 is an example of the point cloud decoder and may perform a decoding operation, which is a reverse process to the encoding operation of the point cloud encoder illustrated in FIGS. 1 to 6.

As described with reference to FIGS. 1 and 6, the point cloud decoder may perform geometry decoding and attribute decoding. The geometry decoding is performed before the attribute decoding.

The point cloud decoder according to the embodiments includes an arithmetic decoder (Arithmetic decode) 7000, an octree synthesizer (Synthesize octree) 7001, a surface approximation synthesizer (Synthesize surface approximation) 7002, and a geometry reconstructor (Reconstruct geometry) 7003, a coordinate inverse transformer (Inverse transform coordinates) 7004, an arithmetic decoder (Arithmetic decode) 7005, an inverse quantizer (Inverse quantize) 7006, a RAHT transformer 7007, an LOD generator (Generate LOD) 7008, an inverse lifter (inverse lifting) 7009, and/or a color inverse transformer (Inverse transform colors) 7010.

The arithmetic decoder 7000, the octree synthesizer 7001, the surface approximation synthesizer 7002, and the geometry reconstructor 7003, and the coordinate inverse transformer 7004 may perform geometry decoding. The geometry decoding according to the embodiments may include direct decoding and trisoup geometry decoding. The direct coding and trisoup geometry decoding are selectively applied. The geometry decoding is not limited to the above-described example, and is performed as a reverse process to the geometry encoding described with reference to FIGS. 1 to 6.

The arithmetic decoder 7000 according to the embodiments decodes the received geometry bitstream based on the arithmetic coding. The operation of the arithmetic decoder 7000 corresponds to the reverse process to the arithmetic encoder 30004.

The octree synthesizer 7001 according to the embodiments may generate an octree by acquiring an occupancy code from the decoded geometry bitstream (or information on the geometry secured as a result of decoding). The occupancy code is configured as described in detail with reference to FIGS. 1 to 6.

When the trisoup geometry encoding is applied, the surface approximation synthesizer 7002 according to the embodiments may synthesize a surface based on the decoded geometry and/or the generated octree.

The geometry reconstructor 7003 according to the embodiments may regenerate geometry based on the surface and/or the decoded geometry. As described with reference to FIGS. 1 to 9, direct coding and trisoup geometry encoding are selectively applied. Accordingly, the geometry reconstructor 7003 directly imports and adds position information about the points to which direct coding is applied. When the trisoup geometry encoding is applied, the geometry reconstructor 7003 may reconstruct the geometry by performing the reconstruction operations of the geometry reconstructor 30005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 7004 according to the embodiments may acquire positions of the points by transforming the coordinates based on the reconstructed geometry.

The arithmetic decoder 7005, the inverse quantizer 7006, the RAHT transformer 7007, the LOD generator 7008, the inverse lifter 7009, and/or the color inverse transformer 7010 may perform the attribute decoding described with reference to FIG. 6. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 7005 according to the embodiments decodes the attribute bitstream by arithmetic coding.

The inverse quantizer 7006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 7007, the LOD generator 7008, and/or the inverse lifter 7009 may process the reconstructed geometry and the inversely quantized attributes. As described above, the RAHT transformer 7007, the LOD generator 7008, and/or the inverse lifter 7009 may selectively perform a decoding operation corresponding to the encoding of the point cloud encoder.

The color inverse transformer 7010 according to the embodiments performs inverse transform coding to inversely transform a color value (or texture) included in the decoded attributes. The operation of the color inverse transformer 7010 may be selectively performed based on the operation of the color transformer 30006 of the point cloud encoder.

Although not shown in the figure, the elements of the point cloud decoder of FIG. 7 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 7 described above. Additionally, the one or more processors may operate or execute a set of software programs and/or instructions for performing the operations and/or functions of the elements of the point cloud decoder of FIG. 7.

FIG. 8 illustrates a transmission device according to embodiments.

The transmission device shown in FIG. 8 is an example of the transmission device 10000 of FIG. 1 (or the point cloud encoder of FIG. 3). The transmission device illustrated in FIG. 8 may perform one or more of the operations and methods the same as or similar to those of the point cloud encoder described with reference to FIGS. 1 to 6. The transmission device according to the embodiments may include a data input unit 8000, a quantization processor 8001, a voxelization processor 8002, an octree occupancy code generator 8003, a surface model processor 8004, an intra/inter-coding processor 8005, an arithmetic coder 8006, a metadata processor 8007, a color transform processor 8008, an attribute transform processor 8009, a prediction/lifting/RAHT transform processor 8010, an arithmetic coder 8011 and/or a transmission processor 8012.

The data input unit 8000 according to the embodiments receives or acquires point cloud data. The data input unit 8000 may perform an operation and/or acquisition method the same as or similar to the operation and/or acquisition method of the point cloud video acquirer 10001 (or the acquisition process 20000 described with reference to FIG. 2).

The data input unit 8000, the quantization processor 8001, the voxelization processor 8002, the octree occupancy code generator 8003, the surface model processor 8004, the intra/inter-coding processor 8005, and the arithmetic coder 8006 perform geometry encoding. The geometry encoding according to the embodiments is the same as or similar to the geometry encoding described with reference to FIGS. 1 to 9, and thus a detailed description thereof is omitted.

The quantization processor 8001 according to the embodiments quantizes geometry (e.g., position values of points). The operation and/or quantization of the quantization processor 8001 is the same as or similar to the operation and/or quantization of the quantizer 30001 described with reference to FIG. 3. Details are the same as those described with reference to FIGS. 1 to 9.

The voxelization processor 8002 according to the embodiments voxelizes the quantized position values of the points. The voxelization processor 8002 may perform an operation and/or process the same or similar to the operation and/or the voxelization process of the quantizer 30001 described with reference to FIG. 3. Details are the same as those described with reference to FIGS. 1 to 6.

The octree occupancy code generator 8003 according to the embodiments performs octree coding on the voxelized positions of the points based on an octree structure. The octree occupancy code generator 8003 may generate an occupancy code. The octree occupancy code generator 8003 may perform an operation and/or method the same as or similar to the operation and/or method of the point cloud encoder (or the octree analyzer 30002) described with reference to FIGS. 3 and 4. Details are the same as those described with reference to FIGS. 1 to 6.

The surface model processor 8004 according to the embodiments may perform trisoup geometry encoding based on a surface model to reconstruct the positions of points in a specific region (or node) on a voxel basis. The surface model processor 8004 may perform an operation and/or method the same as or similar to the operation and/or method of the point cloud encoder (e.g., the surface approximation analyzer 30003) described with reference to FIG. 3. Details are the same as those described with reference to FIGS. 1 to 6.

The intra/inter-coding processor 8005 according to the embodiments may perform intra/inter-coding on point cloud data. The intra/inter-coding processor 8005 may perform coding the same as or similar to the intra/inter-coding described with reference to FIG. 7. Details are the same as those described with reference to FIG. 7. According to embodiments, the intra/inter-coding processor 8005 may be included in the arithmetic coder 8006.

The arithmetic coder 8006 according to the embodiments performs entropy encoding on an octree of the point cloud data and/or an approximated octree. For example, the encoding scheme includes arithmetic encoding. The arithmetic coder 8006 performs an operation and/or method the same as or similar to the operation and/or method of the arithmetic encoder 30004.

The metadata processor 8007 according to the embodiments processes metadata about the point cloud data, for example, a set value, and provides the same to a necessary processing process such as geometry encoding and/or attribute encoding. Also, the metadata processor 8007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 8008, the attribute transform processor 8009, the prediction/lifting/RAHT transform processor 8010, and the arithmetic coder 8011 perform the attribute encoding. The attribute encoding according to the embodiments is the same as or similar to the attribute encoding described with reference to FIGS. 1 to 6, and thus a detailed description thereof is omitted.

The color transform processor 8008 according to the embodiments performs color transform coding to transform color values included in attributes. The color transform processor 8008 may perform color transform coding based on the reconstructed geometry. The reconstructed geometry is the same as described with reference to FIGS. 1 to 9. Also, it performs an operation and/or method the same as or similar to the operation and/or method of the color transformer 30006 described with reference to FIG. 3 is performed. A detailed description thereof is omitted.

The attribute transform processor 8009 according to the embodiments performs attribute transformation to transform the attributes based on the reconstructed geometry and/or the positions on which geometry encoding is not performed. The attribute transform processor 8009 performs an operation and/or method the same as or similar to the operation and/or method of the attribute transformer 30007 described with reference to FIG. 3. A detailed description thereof is omitted. The prediction/lifting/RAHT transform processor 8010 according to the embodiments may code the transformed attributes by any one or a combination of RAHT coding, prediction transform coding, and lifting transform coding. The prediction/lifting/RAHT transform processor 8010 performs at least one of the operations the same as or similar to the operations of the RAHT transformer 30008, the LOD generator 30009, and the lifting transformer 30010 described with reference to FIG. 3. In addition, the prediction transform coding, the lifting transform coding, and the RAHT transform coding are the same as those described with reference to FIGS. 1 to 9, and thus a detailed description thereof is omitted.

The arithmetic coder 8011 according to the embodiments may encode the coded attributes based on the arithmetic coding. The arithmetic coder 8011 performs an operation and/or method the same as or similar to the operation and/or method of the arithmetic encoder 300012.

The transmission processor 8012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream Geom00 and one or more attribute bitstreams Attr00 and Attr10.

A slice refers to a series of syntax elements representing the entirety or part of a coded point cloud frame.

The TPS according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 8007 according to the embodiments may generate and/or process the signaling information and transmit the same to the transmission processor 8012. According to embodiments, the elements to perform geometry encoding and the elements to perform attribute encoding may share data/information with each other as indicated by dotted lines. The transmission processor 8012 according to the embodiments may perform an operation and/or transmission method the same as or similar to the operation and/or transmission method of the transmitter 10003. Details are the same as those described with reference to FIGS. 1 and 2, and thus a description thereof is omitted.

FIG. 9 illustrates a reception device according to embodiments.

The reception device illustrated in FIG. 9 is an example of the reception device 10004 of FIG. 1 (or the point cloud decoder of FIGS. 10 and 11). The reception device illustrated in FIG. 9 may perform one or more of the operations and methods the same as or similar to those of the point cloud decoder described with reference to FIGS. 1 to 11.

The reception device according to the embodiment may include a receiver 9000, a reception processor 9001, an arithmetic decoder 9002, an occupancy code-based octree reconstruction processor 9003, a surface model processor (triangle reconstruction, up-sampling, voxelization) 9004, an inverse quantization processor 9005, a metadata parser 9006, an arithmetic decoder 9007, an inverse quantization processor 9008, a prediction/lifting/RAHT inverse transform processor 9009, a color inverse transform processor 9010, and/or a renderer 9011. Each element for decoding according to the embodiments may perform a reverse process to the operation of a corresponding element for encoding according to the embodiments.

The receiver 9000 according to the embodiments receives point cloud data. The receiver 9000 may perform an operation and/or reception method the same as or similar to the operation and/or reception method of the receiver 10005 of FIG. 1. The detailed description thereof is omitted.

The reception processor 9001 according to the embodiments may acquire a geometry bitstream and/or an attribute bitstream from the received data. The reception processor 9001 may be included in the receiver 9000.

The arithmetic decoder 9002, the occupancy code-based octree reconstruction processor 9003, the surface model processor 9004, and the inverse quantization processor 905 may perform geometry decoding. The geometry decoding according to embodiments is the same as or similar to the geometry decoding described with reference to FIGS. 1 to 10, and thus a detailed description thereof is omitted.

The arithmetic decoder 9002 according to the embodiments may decode the geometry bitstream based on arithmetic coding. The arithmetic decoder 9002 performs an operation and/or coding the same as or similar to the operation and/or coding of the arithmetic decoder 7000.

The occupancy code-based octree reconstruction processor 9003 according to the embodiments may reconstruct an octree by acquiring an occupancy code from the decoded geometry bitstream (or information about the geometry secured as a result of decoding). The occupancy code-based octree reconstruction processor 9003 performs an operation and/or method the same as or similar to the operation and/or octree generation method of the octree synthesizer 7001. When the trisoup geometry encoding is applied, the surface model processor 9004 according to the embodiments may perform trisoup geometry decoding and related geometry reconstruction (e.g., triangle reconstruction, up-sampling, voxelization) based on the surface model method. The surface model processor 9004 performs an operation the same as or similar to that of the surface approximation synthesizer 7002 and/or the geometry reconstructor 7003.

The inverse quantization processor 9005 according to the embodiments may inversely quantize the decoded geometry.

The metadata parser 9006 according to the embodiments may parse metadata contained in the received point cloud data, for example, a set value. The metadata parser 9006 may pass the metadata to geometry decoding and/or attribute decoding. The metadata is the same as that described with reference to FIG. 8, and thus a detailed description thereof is omitted.

The arithmetic decoder 9007, the inverse quantization processor 9008, the prediction/lifting/RAHT inverse transform processor 9009 and the color inverse transform processor 9010 perform attribute decoding. The attribute decoding is the same as or similar to the attribute decoding described with reference to FIGS. 1 to 10, and thus a detailed description thereof is omitted.

The arithmetic decoder 9007 according to the embodiments may decode the attribute bitstream by arithmetic coding. The arithmetic decoder 9007 may decode the attribute bitstream based on the reconstructed geometry. The arithmetic decoder 9007 performs an operation and/or coding the same as or similar to the operation and/or coding of the arithmetic decoder 7005.

The inverse quantization processor 9008 according to the embodiments may inversely quantize the decoded attribute bitstream. The inverse quantization processor 9008 performs an operation and/or method the same as or similar to the operation and/or inverse quantization method of the inverse quantizer 7006.

The prediction/lifting/RAHT inverse transform processor 9009 according to the embodiments may process the reconstructed geometry and the inversely quantized attributes. The prediction/lifting/RAHT inverse transform processor 9009 performs one or more of operations and/or decoding the same as or similar to the operations and/or decoding of the RAHT transformer 7007, the LOD generator 7008, and/or the inverse lifter 7009. The color inverse transform processor 9010 according to the embodiments performs inverse transform coding to inversely transform color values (or textures) included in the decoded attributes. The color inverse transform processor 9010 performs an operation and/or inverse transform coding the same as or similar to the operation and/or inverse transform coding of the color inverse transformer 7010. The renderer 9011 according to the embodiments may render the point cloud data.

FIG. 10 illustrates an exemplary structure operable in connection with point cloud data transmission/reception methods/devices according to embodiments.

The structure of FIG. 10 represents a configuration in which at least one of a server 1060, a robot 1010, a self-driving vehicle 1020, an XR device 1030, a smartphone 1040, a home appliance 1050, and/or a head-mount display (HMD) 1070 is connected to the cloud network 1000. The robot 1010, the self-driving vehicle 1020, the XR device 1030, the smartphone 1040, or the home appliance 1050 is called a device. Further, the XR device 1030 may correspond to a point cloud data (PCC) device according to embodiments or may be operatively connected to the PCC device.

The cloud network 1000 may represent a network that constitutes part of the cloud computing infrastructure or is present in the cloud computing infrastructure. Here, the cloud network 1000 may be configured using a 3G network, 4G or Long Term Evolution (LTE) network, or a 5G network.

The server 1060 may be connected to at least one of the robot 1010, the self-driving vehicle 1020, the XR device 1030, the smartphone 1040, the home appliance 1050, and/or the HMD 1070 over the cloud network 1000 and may assist in at least a part of the processing of the connected devices 1010 to 1070.

The HMD 1070 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1010 to 1050 to which the above-described technology is applied will be described. The devices 1010 to 1050 illustrated in FIG. 10 may be operatively connected/coupled to a point cloud data transmission device and reception device according to the above-described embodiments.

<PCC+XR>

The XR/PCC device 1030 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1030 may analyze 3D point cloud data or image data acquired through various sensors or from an external device and generate position data and attribute data about 3D points. Thereby, the XR/PCC device 1030 may acquire information about the surrounding space or a real object, and render and output an XR object. For example, the XR/PCC device 1030 may match an XR object including auxiliary information about a recognized object with the recognized object and output the matched XR object.

<PCC+XR+Mobile phone>

The XR/PCC device 1030 may be implemented as a mobile phone 1040 by applying PCC technology.

The mobile phone 1040 may decode and display point cloud content based on the PCC technology.

<PCC+Self-driving+XR>

The self-driving vehicle 1020 may be implemented as a mobile robot, a vehicle, an unmanned aerial vehicle, or the like by applying the PCC technology and the XR technology.

The self-driving vehicle 1020 to which the XR/PCC technology is applied may represent a self-driving vehicle provided with means for providing an XR image, or a self-driving vehicle that is a target of control/interaction in the XR image. In particular, the self-driving vehicle 1020 which is a target of control/interaction in the XR image may be distinguished from the XR device 1030 and may be operatively connected thereto.

The self-driving vehicle 1020 having means for providing an XR/PCC image may acquire sensor information from sensors including a camera, and output the generated XR/PCC image based on the acquired sensor information. For example, the self-driving vehicle 1020 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

The point cloud data transmission method/device according to embodiments may be construed as a term referring to the transmission device 10000 of FIG. 1, the point cloud video encoder 10002 of FIG. 1, the transmitter 10003 of FIG. 1, the acquisition 20000-encoding 20001-transmission 20002 of FIG. 2, the encoder of FIG. 3, the transmission device of FIG. 8, the devices of FIG. 10, the GoF-based encoding of FIG. 11, the context-based encoding of FIGS. 12 to 15, the encoders of FIGS. 16A and 16B, the bitstream and parameter generation of FIGS. 18 to 23, and the transmission method of FIG. 24.

The point cloud data transmission method/device according to embodiments may be construed as a term referring to the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 3, the transmission device of FIG. 8, the devices of FIG. 10, the GoF-based decoding of FIG. 11, the context-based decoding of FIGS. 12 to 15, the decoders of FIGS. 17A and 17B, the bitstream and parameter parsing of FIGS. 18 to 23, and the transmission method of FIG. 25.

Additionally, the point cloud data transmission/reception method/device according to the embodiments may be referred to simply as a method/device.

According to embodiments, geometry data, geometry information, position information, and geometry constituting point cloud data are to be construed as having the same meaning. Attribute data and attribute information constituting the point cloud data are to be construed as having the same meaning.

Embodiments extend encoding and decoding methods using continuity of reference frames of point cloud data.

Embodiments relate to a method for improving encoding and decoding performance using continuity of reference frames of point cloud data. In point cloud compression, encoding efficiency of the bitstream may be improved by using information about prediction between reference frames. Embodiments provide a compression method using continuity of reference frames as a method to improve performance of point cloud compression.

The present embodiments present a method for improving performance in inter-frame compression of 3D point cloud data on a basis of GoP including an intra frame (I frame), predicted frames (P frames), and bidirectional frames (B frames). Based on correlations between frames, redundant information generated in inter-frame prediction may be replaced with signaling. In addition, a context continue flag may be used by indexing frames with similar geometry/attribute contexts.

A point cloud is composed of a set of points, each of which may have geometry information and attribute information.

Referring to FIGS. 3 and 7, the point cloud encoding process may include compressing geometry, and compressing attribute information based on geometry (reconstructed geometry = decoded geometry) reconstructed based on position information changed through the compression operation. The point cloud decoding process may include receiving an encoded geometry bitstream and attribute bitstream, decoding geometry, and decoding attribute information based on the geometry reconstructed through the decoding operation.

FIG. 11 illustrates an I-frame and P-frames in each Group of Frames (GoF) according to embodiments.

The point cloud data transmission method/device according to embodiments (the transmission device 10000 of FIG. 1, the point cloud video encoder 10002 of FIG. 1, the transmitter 10003 of FIG. 1, the acquisition 20000-encoding 20001-transmission 20002 of FIG. 2, the encoder of FIG. 3, the transmission device of FIG. 8, the devices of FIG. 10, the context-based encoding of FIGS. 12 to 15, the encoders of FIGS. 16A and 16B, the bitstream and parameter generation of FIGS. 18 to 23, and the transmission method of FIG. 24) may perform GoF-based encoding as illustrated in FIG. 11.

The point cloud data transmission method/device according to embodiments (the transmission device 10000 of FIG. 1, the point cloud video encoder 10002 of FIG. 1, the transmitter 10003 of FIG. 1, the acquisition 20000/encoding 20001/transmission 20002 of FIG. 2, the encoder of FIG. 3, the transmission device of FIG. 8, the devices of FIG. 10, the context-based decoding of FIGS. 12 to 15, the decoders of FIGS. 17A and 17B, the bitstream and parameter parsing of FIGS. 18 to 23, and the transmission method of FIG. 25) may perform GoF-based decoding as illustrated in FIG. 11.

For example, the standard for point cloud compression and reconstruction includes two versions: GPCCv1 (intra frame coding) and GPCCv2 (inter frame coding). In point cloud data, category 3-frame data corresponds to GPCCv2 inter-frames and takes the form of a set of consecutive frames. Similar to the 2D video compression scheme, a group of frames (GoF) including an I frame and P/B frames are defined for inter-frame codecs. Here, the GoF may be encoded/decoded in the form of IPPP, IPPBPP, or IBBPBB depending on how the GoF is defined. The IPPP form may be defined as shown in FIG. 11, depending on the reference frame.

For example, an I-frame, which is an intra frame, is an independent frame that is compressed and reconstructed as a single frame. A P-frame, which is a predictive frame, is compressed and reconstructed through prediction or motion compensation based on a previous I-frame or P-frame. A B-frame, which is a bidirectional predictive frame, is compressed and reconstructed through prediction based on previous frames and/or subsequent frames.

Embodiments may improve the inter-frame compression performance for point cloud data and propose a method of determining whether to use continuity information based on inter-frame correlation and signaling the same. The encoder may search for inter-frame correlations and perform encoding/decoding based on the continuity of the context of reference frames in a GoF. In addition to the context-continuity-based inter-frame encoding method, embodiments propose the following schemes for signaling the index of referenced frames: 1) a GoF frame structure, 2) search for correlation between reference frames in a GoF, 3) encoding/decoding context continuity of reference frames in a GoF, and 4) signaling of indexing of continuity information.

Embodiments propose a compression method using a continuous context model of a reference frame or previous reference frame within a GoF, and a probability model for arithmetic encoding. The method may improve compression efficiency by using methods including encoding/decoding the index based on the correlation between a previous reference frame and a current frame as a way to use continuous probabilities.

Regarding the GoF frame structure, a probability model either within or outside the GoF structure may be used for a point cloud. A GoF may constitute one frame group in the form of IBBPBBPBBP.... The GoF structure may include I, P, and B frames. Groups starting with an I-frame may be defined in various forms. Context continuity may be defined within or outside the defined structure.

Methods/devices according to embodiments may include and perform a method of searching for correlation between reference frames in a GoF. The GoF may be a group starting with an I-frame and may serve as a unit of encoding/decoding. In the encoding/decoding process, context-adaptive binary arithmetic coding (CABAC) may be used for point cloud data. In this case, the probability mode that may be used for arithmetic coding may be initialized for each frame. Alternatively, the probability mode may not be initialized but may be reused in the next frame by searching for inter-frame correlation. When frames have similar characteristics, reusing the probability mode allows for utilization of symbol redundancy. Thus, by reusing a context between frames with similar characteristics, compression efficiency may be improved. In addition to the context-based coding method, models of arithmetic coding, Huffman coding, and range coding may be reused to use probabilistic continuity across frames.

Inter-frame correlation according to embodiments may be determined using the following methods.

1) I-frame/P-frame: Inter-frame correlation may be determined by comparing I-frames and P-frames.
2) Difference in global motion vector/matrix between the current frame and the previous frame: Inter-frame correlation may be determined based on the difference in global motion vector or matrix between the current frame and the previous frame.
3) Comparison of the values obtained by applying scale to the translation and rotation of the global motion vector/matrix between the current frame and the previous frame and a set threshold: Inter-frame correlation may be determined based on whether the values obtained by applying scale to the translation and/or rotation of the global motion vector or matrix between the current frame and the previous frame are greater than or less than the set threshold.
4) Total sum of differences in local motion vector/matrix from the previous frame: Inter-frame correlation may be determined based on the total sum of differences in local motion vector or matrix between the current frame and the previous frame.
5) Comparison of the values obtained by applying scale to the translation and rotation of the local motion vector/matrix between the current frame and the previous frame and a set threshold: Inter-frame correlation may be determined based on whether the values obtained by applying scale to the translation and/or rotation of the local motion vector or matrix between the current frame and the previous frame are greater than or less than the set threshold.
6) RDO of points/geometry/attribute values of the previous frame and the current frame: Inter-frame correlation may be determined based on the RDO of points, the RDO of geometry data, and/or the RDO of attribute data from the current frame and the previous frame.
7) Variation in motion vector values or motion-compensated values of a road or an object between the current frame and the previous frame: Inter-frame correlation may be determined based on the variation in motion vector and/or motion compensation of a road and/or an object between the current frame and the previous frame.

Here, the previous frame may be the frame immediately preceding the current frame, or may be indexed as a previously decoded frame with a high correlation. The index obtained by continuously using the probability model is used to decode the current frame.

Methods/devices according to embodiments may include and perform encoding and decoding methods using context continuity of reference frames in a GoF.

Encoding/decoding may be performed by sharing the probability model with a frame for which it is determined that there is a correlation between reference frames. The encoder may encode the geometry information and attribute information about the current frame by continuing the context of the correlated frame. The decoder may perform decoding using the context that has been continuously used for the previous frame.

The context-continuity-based encoding and decoding methods according to the embodiments may include 1) a context continuity-based encoding/decoding method regardless of the correlation within a GoF (FIG. 12), 2) a method of encoding and decoding only the geometry based on context continuity after searching for the correlation within a GoF (FIG. 13), 3) a method of encoding and decoding only attributes based on context continuity after searching for attribute correlations within a GoF (FIG. 14), and/or 4) a context continuity-based encoding/decoding method using the relationship between context correlation flags (FIG. 15).

FIG. 12 illustrates a context continuity-based encoding and decoding method according to embodiments.

FIG. 12 illustrates a method of performing arithmetic encoding/decoding ON geometry data and attribute data by setting context continuity-related flag information without determining correlation within the GoF.

Through context continuity flags (geometry_context_continue_flag, attribute_context_continue_flag), encoding and decoding may be performed using context continuity from the previous frame regardless of inter-frame correlation. Thereby, the time required for correlation search may be reduced.

Depending on the value of geometry_context_continue_flag, the application of attribute context continuity may be determined.

For example, when the frame is initialized, and it is in a random access period, the geometry entropy context may be initialized before arithmetic encoding of the geometry data of the frame without using frame continuity. The attribute entropy context may be initialized before arithmetic encoding of the attribute data. Then, the geometry and/or attribute data contained in the frame may be encoded and decoded. The entropy context probability applied to the current frame is stored. It is then determined, based on the frame count, whether all frames in the frame group have been encoded or decoded, and the procedure is terminated.

When the frame is not in the random access period, it is determined whether the value of the geometry context continue flag is true or false in order to use frame continuity. When the value of the flag is not true, the geometry entropy context is initialized. When the value of the flag is true, it is determined whether the value of the attribute context continue flag is true or false. When the value of this flag is not true, the attribute entropy context is initialized. When the value of this flag is true, the geometry data and attribute data of the frame are encoded and decoded. In other words, the geometry entropy context and/or attribute entropy context for the current frame may not be initialized, but may be used to perform arithmetic encoding and arithmetic decoding on the geometry data and attribute data of the frame. The entropy context probability used is stored, and it is determined whether the procedure for all frames has been completed. The procedure is repeated for the next frame after the current frame in the frame group.

For example, when the frame is initialized, and it is in a random access period, the geometry entropy context may be initialized before arithmetic encoding of the geometry data of the frame without using frame continuity. The attribute entropy context may be initialized before arithmetic encoding of the attribute data. Then, the geometry and/or attribute data contained in the frame may be encoded and decoded. The entropy context probability applied to the current frame is stored. It is then determined, based on the frame count, whether all frames in the frame group have been encoded or decoded, and the procedure is terminated.

When the frame is not in the random access period, it is determined whether the value of the geometry context continue flag is true or false in order to use frame continuity. When the value of the flag is not true, the geometry entropy context is initialized. Also, the attribute entropy context is initialized. When the value of this flag is true, the geometry data and attribute data of the frame are encoded and decoded. In other words, the geometry entropy context and/or attribute entropy context for the current frame may not be initialized, but may be used to perform arithmetic encoding and arithmetic decoding on the geometry data and attribute data of the frame. The entropy context probability used is stored, and it is determined whether the procedure for all frames has been completed. The procedure is repeated for the next frame after the current frame in the frame group.

A point cloud data transmission device or encoder may set the values of the geometry context continue flag and the attribute context continue flag. The values of the geometry context continue flag and the attribute context continue flag may be set for the frames in the GoF. The values of the geometry context continue flag and the attribute context continue flag may be set before arithmetic encoding is applied. The point cloud data transmission device or encoder may set the values of the geometry context continue flag and attribute context continue flag based on the conditions for determining inter-frame correlation. In encoding the GoF, the point cloud data transmission device or encoder may perform context continuity encoding according to the values indicated by the geometry context continue flag and attribute context continue flag without performing a separate frame correlation determination procedure.

Also, as illustrated in the two examples of FIG. 12, the geoometry context continue flag and the attribute context continue flag may be defined and used, respectivley. Alternatively, only the geometry context continue flag may be used, and the processing of context continuity for geometry and attributes may be indicated based on the value of the geometry context continue flag, without separately defining or using the attribute context continue flag.

A point cloud data reception device or decoder may receive the geometry context continue flag and/or attribute context continue flag set by the transmission device or encoder, and may perform context-continuity-based arithmetic decoding on the geometry data and/or attribute data.

FIG. 13 illustrates a context continuity-based encoding and decoding method according to embodiments.

FIG. 13 illustrates a method of encoding and decoding only geometry based on context continuity after searching for a correlation in the GoF.

When geometry_context_continue_flag is set, inter-frame correlation may be searched for. When the correlation is high, encoding/decoding may be performed continuously using the geometry context from the previous frame. When there is no correlation, the geometry context may be initialized. The correlation may be determined differently for LiDAR content and object-centric content. For example, for LiDAR content, when it is determined that the center point for capturing the content has moved/rotated beyond a specific threshold, encoding/decoding may be performed continuously using the geometry context from the previous frame. Depending on whether geometry context continuity is applied, it is determined whether to apply attribute context continuity.

A method/device according to embodiments initializes a frame. When it is the random access period, there is no need to use inter-frame continuity for random access, and the geometry entropy context is initialized. Then, the attribute entropy context is initialized. The geometry data and/or attribute data of the frame are encoded and decoded. The entropy context probability applied for the current frame is stored. The same procedure is repeated for the frames in the GoF.

When the frame is not in the random access period and the value of the geometry context continue flag is not true, the correlation or similarity between frames is determined. If the correlation or similarity is not true, the geometry entropy context and attribute entropy context are initialized. If the correlation or similarity is true, the geometry data and/or attribute data of the frame is encoded and decoded withtout initializing the entropy contexts. The entropy context probability applied to the current frame is stored, and the same procedure is repeated for the frames in the GoF.

If the value of the geometry context continue flag is true, the geometry data and/or attribute data of the current frame is encoded and decoded withtout determining the correlation or similarity. The entropy context probability applied to the current frame is stored. The same procedure is repeated for the frames in the GoF.

FIG. 14 illustrates a context continuity-based encoding and decoding method according to embodiments.

FIG. 14 illustrates a method of encoding and decoding only attributes using context continuity after searching for an attribute correlation in a GoF.

When attribute_context_continue_flag is set, inter-frame correlation may be searched for. When the correlation is high, encoding/decoding may be performed continuously using the attribute context from the previous frame. When there is no correlation, the attribute context may be initialized. The correlation may be determined differently for LiDAR content and general content. For example, for LiDAR content, when it is determined that the center point for capturing the content has moved/rotated beyond a specific threshold, encoding/decoding may be performed continuously using the attribute context from the previous frame. Alternatively, depending on whether attribute inter prediction is applied, the attribute context may be used continuously from the previous frame. The attribute context continue flag may be applied independently from the geometry context continue flag.

A method/device according to embodiments initializes a frame, and determines whether it is in the random access period. When it is in the random access period, the geometry entropy context is initialized without the need to use inter-frame continuity for random access. Then, the attribute entropy context is initialized. The geometry data and/or attribute data of the frame is encoded and decoded. The entropy context probability applied to the current frame is stored. The same procedure is repeated for the frames in the GoF.

When the frame is not in the random access period and the value of the geometry context continue flag is not true, the correlation or similarity between frames is determined. If the correlation or similarity is not true, the geometry entropy context and attribute entropy context are initialized. The geometry data and/or attribute data of the frame is encoded and decoded. The entropy context probability applied to the current frame is stored, and the same procedure is repeated for the frames in the GoF.

**If** the value of the geometry context continue flag is true and the value of the attribute context continue flag is not true, the correlation or similarity between frames is determined. If the correlation or similarity is not true, the attribute entropy context is initialized. The geometry data and/or attribute data of the frame is encoded and decoded. The entropy context probability applied to the current frame is stored, and the same procedure is repeated for the frames in the GoF.

**If** the value of the geometry context continue flag is true and the value of the attribute context continue flag is also true, the geometry data and/or attribute data of the frame is encoded and decoded based on the geometry entropy context and attribute entropy context. The entropy context probability applied to the current frame is stored. The same procedure is repeated for the frames in the GoF.

FIG. 15 illustrates the relationship between context correlation flags according to embodiments.

FIG. 15 illustrates the relationship between context continuity flags.

When geometry_slice_context_continue_flag is set to true, the continuity with the previous frame in the GoF may be ignored.

**If** the value of the geometry slice context continue flag is true and the random access period is true, the geometry entropy context is initialized, and the attribute entropy context is initialized. Also, the geometry data and attribute data of the frame are encoded and decoded. The entropy context probability applied to the current frame is stored. The same procedure is repeated for the frames in the GoF.

**If** the value of the geometry slice context continue flag is true, the random access period is not true, and the value of the geometry context continue flag is not true, the geometry entropy context is initialized and then the attribute entropy context is initialized. The, the geometry and attribute data of the frame are encoded and decoded. The entropy context probability applied to the current frame is stored. The same procedure is repeated for the frames in the GoF.

If the value of the geometry context continue flag is true and the value of the attribute context continuity flag is not true, the attribute entropy context is initialized, and the geometry and attribute data of the frame are encoded and decoded. The entropy context probability applied to the current frame is stored. The same procedure is repeated for the frames in the GoF.

If the value of the attribute context continue flag is true, the geometry and attribute data of the frame are encoded and decoded. The entropy context probability applied to the current frame is stored. The same procedure is repeated for the frames in the GoF.

A method/device according to embodiments may signal indexing of continuity information. When the context or probability model for a previous frame is used continuously, the decoder may receive information about which of the previous frames was used. The index signaled to the decoder may indicate the distance from the current frame, the distance from the I-frame, or the number of frames from a start frame.

FIGS. 16A and 16B illustrate a point cloud data encoding device according to embodiments.

Each component in FIGS. 16A and 16B may correspond to hardware, software, a processor, and/or a combination thereof. The device may include a memory storing instructions for encoding point cloud data and a processor, wherein the instructions may cause the processor to perform encoding operations.

FIG. 16A illustrates the operation of encoding point cloud data on a frame basis when a single frame is input, and FIG. 16B further illustrates the operation of encoding point cloud data across multiple frames in a GoF.

A data input unit acquires point cloud data.

A coordinate transformer transforms the coordinate system of geometry data representing the positions of points.

A quantization/voxelization processor quantizes the geometry data based on quantization parameters and voxelizes the data into voxels.

An octree occupancy code generator generates an occupancy code indicating whether points corresponding to the geometry data occupy nodes in an octree.

A surface model processor may process the surface of the geometry data using a trisoup or the like.

A geometry context continuity determination/storage part may determine whether to use context continuity before arithmetic encoding and store the context used. The geometry context continuity determination/storage part may determine correlations with previous frames to determine a frame for which context continuity is to be used. The index of the frame for which context continuity is used may be signaled to the decoder. The context continuity may be applied identically or differently to the geometry data and/or the attribute data. In the case of different application, signaling information with different values may be provided for the geometry data and/or the attribute data to indicate the index of the referenced frame according to the context continuity to the decoder.

An arithmetic coder performs arithmetic coding on the geometry data.

A color transform processor may transform the color scheme when attribute data, which is an attribute of points, is color.

An attribute transform processor may sort the points of the attribute data and search for neighbors.

A prediction/lifting/RAHT transform processor may transform the attribute data based on the prediction, lifting, and/or RAHT scheme.

A coefficient quantization processor may quantize the coefficients of the attribute data resulting from the transformation.

An attribute context continuity determination/storage part may determine whether to use context continuity before arithmetic encoding and store the context used. The attribute context continuity determination/storage part may determine correlations with previous frames to determine a frame for which context continuity is to be used. The index of the frame for which context continuity is used may be signaled to the decoder. The context continuity may be applied identically or differently to the geometry data and/or the attribute data. In the case of different application, signaling information with different values may be provided for the geometry data and/or the attribute data to indicate the index of the referenced frame according to the context continuity to the decoder.

FIG. 16B illustrates FIG. 16A in more detail. For the identical components in FIGS. 16A and 16B, refer to the descriptions given above.

An LPU partitioner partitions point cloud data into largest prediction units (LPUs).

Depending on whether the frame containing the point cloud data is a P-frame or an I-frame, encoding is performed as described below.

A motion predictor predicts the motion of geometry information (geometry data or points) included in the P-frame.

A motion compensator predicts the motion for the P-frame and compensates for the motion.

A geometry context continuity determination/storage part determines whether to use the context continuity of geometry or initialize the frame based on the value of a context continue flag.

A geometry information inter-predictor performs inter-frame prediction.

A geometry information entropy encoder performs arithmetic coding on geometry data based on whether context continuity is used according to the inter-frame prediction.

A geometry information intra-predictor performs intra prediction on the I-frame.

The geometry information entropy encoder performs arithmetic coding on the geometry data in the I-frame.

When lossy coding is applied to geometry data, an attribute information encoder adjusts the color of the attribute data. Once inter prediction is performed on the geometry data, inter prediction is also performed on the attribute data. To use inter-frame reference information, the attribute context continuity determination/storage unit performs the same operation. In this operation, the attribute context continuity determination and storage may be performed according to the value of the attribute context continue flag. Alternatively, the same operation may be performed according to the value of the geometry context continue flag rather than the attribute context continue flag.

In the case of intra prediction, the attribute information (attribute data) is predicted within the frame.

The attribute information entropy encoder performs arithmetic coding on the intra- or inter-predicted attribute information.

FIGS. 17A and 17B illustrate a point cloud data decoding device according to embodiments.

Each component in FIGS. 17A and 17B may correspond to hardware, software, a processor, and/or a combination thereof. The decoder may also include a memory storing instructions for decoding point cloud data and a processor, wherein the instructions may cause the processor to perform encoding operations.

FIG. 17A illustrates operations for decoding point cloud data based on a frame baiss when a single frame is input, while FIG. 17B further illustrates the operations for decoding point cloud data across multiple frames in a GoF.

The decoding operations in FIGS. 17A and 17B follow the reverse process of the encoding operations in FIGS. 16A and 16B.

A receiver receives a bitstream containing geometry data and attribute data.

A geometry context continuity processor may decode the geometry data based on context continuity using the index of a received previous frame.

An arithmetic decoder performs arithmetic decoding on the geometry data based on the context continuity.

An occupancy code-based octree reconstruction processor reconstructs an octree (occupancy tree).

A surface model processor processes the geometry surface based on triangle-based reconstruction, up-sampling, or voxelization.

A geometry reconstructor reconstructs the decoded geometry data and provides the same for attribute decoding.

A coordinate inverse transformer inversely transforms the coordinates transformed by the encoder.

An attribute context continuity processor may decode the attribute data based on context continuity using the index of the received previous frame. The attribute reconstruction process may correspond to a reverse process of the operations of the attribute context continuity determination/storage part.

An arithmetic decoder performs arithmetic decoding on the attribute data based on the context continuity.

An inverse quantization processor inversely quantizes the coefficients of the attribute data as an inverse process of the quantization performed by the encoder.

A prediction/lifting/RAHT transform processor transforms the attribute data using one of the prediction, lifting, and RAHT methods applied by the encoder.

An attribute reconstructor reconstructs the attribute data in a reverse process of the attribute transform performed by the encoder.

A color inverse transform processor inversely transforms the color scheme of the attribute data.

FIG. 18B illustrates FIG. 18A in more detail.

The geometry context continuity processor of the geometry decoder determines whether to use geometry context continuity based on the value indicated by a context continue flag included in the bitstream.

Based on the context continue flag, a geometry entropy decoder performs arithmetic decoding on the geometry data.

For predictive decoding, the geometry data is partitioned into LPUs and/or PUs.

In the case of geometry intra-coding, a geometry information intra prediction reconstructor predicts the geometry data in the frame.

A geometry transform inverse quantizer inversely quantizes the predicted geometry data.

The coordinate inverse transformer transforms the coordinate system of the geometry data by inversely performs the operation of the encoder.

In the case of geometry inter-coding, a motion compensator predicts the motion between frames and compensates for the motion.

A geometry inter-prediction reconstructor predicts the geometry data about the current frame based on a reference frame.

The attribute context continuity processor of the attribute decoder in the decoder may decode attribute values based on context continuity using the index of the received previous frame. The attribute reconstruction process may correspond to a reverse process of the operations of the attribute context continuity determination/storage part.

Based on the context continue flag, an attribute residual entropy decoder performs arithmetic decoding on the attribute data.

Depending on whether the attribute intra-coding or inter-coding is performed, the attribute data is predicted and reconstructed within the frame or by referencing a reference frame.

A color inverse transformer transforms the color scheme of the attribute data by inversely performing the operation of the encoder.

FIG. 18 illustrates a bitstream containing point cloud data and parameters according to embodiments.

A method/device for transmitting point cloud data according to embodiments (i.e., the transmission device 10000, point cloud video encoder 10002, transmitter 10003 in FIG. 1, the acquisition 20000/encoding 20001/transmission 20002 in FIG. 2, the encoder in FIG. 3, the transmission device in FIG. 8, the devices in FIG. 10, the GoF-based encoding in FIG. 11, the context-based encoding in FIGS. 12 to 15, the encoders in FIGS. 16A and 16B, and the transmission method in FIG. 24) generates a bitstream and parameters as illustrated in FIGS. 18 to 23.

A method/device for receiving point cloud data according to embodiments (i.e., the reception device 10004, receiver 10005, point cloud video decoder 10006 in FIG. 1, the transmission 20002/decoding 20003/rendering 20004 in FIG. 2, the decoder in FIG. 7, the reception device in FIG. 9, the devices in FIG. 10, the GoF-based decoding in FIG. 11, the context-based decoding in FIGS. 12 to 15, the decoders in FIGS. 17A and 17B, and the reception method in FIG. 25) receives and parses a bitstream and parameters as illustrated in FIGS. 18 to 23.

For example, metadata may be generated and transmitted by a metadata processor (which may also be referred to as a metadata generator) of the transmission device, and may be received and acquired by the metadata parser of the reception device.

Each abbreviation has the following meaning. Each abbreviation may be referred to by another term within the scope of the equivalent meaning: SPS: Sequence Parameter Set; GPS: Geometry Parameter Set; APS: Attribute Parameter Set; TPS: Tile Parameter Set; Geom: Geometry bitstream = geometry slice header + geometry slice data; Attr: Attribute bitstream = attribute blick header + attribute brick data.

Slices, bricks, and data units represent basic units of encoding and decoding. The terms slice, brick, and data unit may correspond to one another.

Tiles or slices may be provided to divide the point cloud into regions for processing. Each region has a different level of importance. Depending on the importance, different filters or filter units may be applied, allowing the use of high-complexity, high-quality filtering methods in important regions.

Depending on the processing capacity of the receiver, different filtering methods may be applied to different regions (divided by tiles or slices) instead of using a complex filtering method for the entire point cloud, ensuring better quality for the regions that are important to the user and appropriate latency in the system.

Thus, when a point cloud is divided into tiles, different filters or filter units may be applied to the respective tiles.

When a point cloud is divided into slices, different filters or filter units may be applied to the respective slices.

The use of geometry and attribute context continuity information may be signaled to and carried in the bitstream.

The bitstream may contain parameter sets and may contain geometry data and one or more attribute data on a slice basis.

A sequence may correspond to a frame and may be divided into multiple tiles. The basic unit for encoding/decoding of the tiles may be a slice. The size and position of the bounding box included in each tile may be signaled by the TPS, which may include a geometry slice header, geometry slice data, an attribute slice header, and attribute slice data for each slice. The slice header carries information related to the slice data. For example, the information may include a parameter set ID, a tile ID, a slice ID, a bounding box position/size, a size of the node, and the number of points included in the node.

The syntax of parameters contained in the bitstream of FIG. 18 is described below with reference to the corresponding drawings.

FIG. 19 illustrates a sequence parameter set (SPS) in a bitstream according to embodiments.

Methods/devices according to embodiments have context continuity structure information included in the SPS.

frameIdx: Signals the index indicating the sequential position of the frame in the current sequence.

context_continue_flag: Signals whether to apply context continuity to both geometry and attributes: True = the current frame uses the continued context of a previous frame; False = the current frame does not use the continued context of the previous frame.

context_continue_use_frameIdx: Indicates the index of a previous frame for which context continuity is used among the previous frames. The index may be signaled as a distance from the current frame, a distance from the first frame, or an index within consecutive P-frames.

The SPS of FIG. 19 may further reference the syntax of parameters according to the GPCC standard document.

FIG. 20 illustrates a tile parameter set (TPS) in a bitstream according to embodiments.

Methods/devices according to embodiments may have context continuity structure information included in the TPS.

tile_ctr: Signals the sequential position of tile the current tile among the total tiles.

tile_context_continue_flag: Signals context continuity on a tile basis. It may signal whether to apply context continuity to both geometry and attribute, or to each individually: True = the current tile uses the context continued from the previous tile. False = the current tile does not use the context continued from the previous tile.

tile_context_continue_use_tileIdx: Indicates the index of a previous tile for which context continuity is used. The index may be signaled as the distance from the current tile or from the first tile.

The TPS of FIG. 20 may further reference the syntax of parameters according to the GPCC standard document.

FIG. 21 illustrates a geometry parameter set (GPS) in a bitstream according to embodiments.

Methods/devices according to embodiments may have context continuity structure information included in the GPS.

frameIdx: Signals the index of the frame in the current sequence.

geometry_context_continue_flag: Signals context continuity on a geometry basis: True = the geometry of the current frame uses the continued context of geometry of a previous frame; False = the geometry of the current frame does not use the continued context of the geometry of the previous frame.

geometry_context_continue_use_frameIdx: Indicates the index of a previous frame for which context continuity is used among the previous frames. The index may be signaled as a distance from the current frame or from the first frame.

The GPS of FIG. 21 may further reference the syntax of parameters according to the GPCC standard document.

FIG. 22 illustrates an attribute parameter set (APS) in a bitstream according to embodiments.

Methods/devices according to embodiments may have context continuity structure information included in the APS.

frameIdx: Signals the index of the frame in the current sequence.

attribute_context_continue_flag: Signals context continuity on an attribute basis: True = the attribute of the current frame uses the continued context of the attribute of a previous frame; False = the attribute of the current frame does not use the continued context of the attribute of the previous frame.

attribute_context_continue_use_frameIdx: Indicates the index of a previous frame for which context continuity is used among the previous frames. The index may be signaled as a distance from the current frame or from the first frame.

The APS of FIG. 22 may further reference the syntax of parameters according to the GPCC standard document.

geometry_context_continue_flag and attribute_context_continue_flag may be defined and signaled as a single context continue flag without distinguishing between geometry and attributes.

FIG. 23 illustrates a geometry slice header (GSH) in a bitstream according to embodiments.

Methods/devices according to embodiments may have context continuity structure information included in the GSH.

gsh_slice_id: Signals the index indicating the sequential position of the current slice.

geometry_slice_context_continue_flag: Signals context continuity on a geometry slice basis: True = the current slice uses the continued context of a previous slice; False = the current slice does not use the continued context of the previous slice.

geometry_slice_context_continue_use_frameIdx: Indicates the index of a previous slice for which context continuity is used among the previous slices. The index may be signaled as a distance from the current slice or from the first slice.

The GSH of FIG. 23 may further reference the syntax of parameters according to the GPCC standard document.

FIG. 24 illustrates a method of encoding point cloud data according to embodiments.

The point cloud data transmission method/device according to the embodiments (i.e., the transmission device 10000, point cloud video encoder 10002, transmitter 10003 in FIG. 1, the acquisition 20000/encoding 20001/transmission 20002 in FIG. 2, the encoder in FIG. 3, the transmission device in FIG. 8, the devices in FIG. 10, the GoF-based encoding in FIG. 11, the context-based encoding in FIGS. 12 to 15, and the encoders in FIGS. 16A and 16B) encodes point cloud data as illustrated in FIG. 24.

S2400: The point cloud data transmission method according to the embodiments may include encoding point cloud data.

The encoding operation according to the embodiments includes the encoding operations performed by the transmission device 10000, point cloud video encoder 10002, transmitter 10003 in FIG. 1, the acquisition 20000/encoding 20001/transmission 20002 in FIG. 2, the encoder in FIG. 3, the transmission device in FIG. 8, and the like, encodes the point cloud according to the operations of the GoF-based encoding in FIG. 11, the context-based encoding in FIGS. 12 to 15, and the encoders in FIGS. 16A and 16B, and generates a bitstream and parameters as shown in FIGS. 18 to 23.

S2401: The point cloud data transmission method according to the embodiments may further include transmitting a bitstream containing the point cloud data. The transmission operation according to the embodiments includes transmitting the encoded bitstream.

Referring to FIG. 16, operation S2400 of encoding the point cloud data may include encoding geometry data of the point cloud data, and encoding attribute data of the point cloud data. The encoding of the geometry data may include determining continuity of a context for the geometry data, and performing arithmetic encoding on the geometry data based on the context. The the encoding of the attribute data may include determining continuity of a context for the attribute data, and performing arithmetic encoding on the attribute data based on the context.

Referring to FIG. 11, operation S2400 of encoding the point cloud data may include encoding the point cloud data based on a group of frames (GoF) including a current frame and at least one reference frame for the current frame, the current frame containing the point cloud data.

Referring to FIG. 11, operation S2400 of encoding the point cloud data may further include performing arithmetic encoding on the point cloud data based on a correlation with the at least one reference frame in the GoF without initializing a context.

Referring to FIG. 12, operation S2400 of encoding the point cloud data may further include, based on a first value of a context continue flag (context_continue_flag), initializing an entropy context and performing arithmetic encoding on the point cloud data, or based on a second value of the context continue flag, performing arithmetic encoding on the point cloud data without initializing the entropy context. The first value of the context continue flag may indicate that a continued context of a previous frame is not used for the encoding of the point cloud data in the current frame, and the second value may indicate that the continued context of the previous frame is used for the encoding of the point cloud data in the current frame.

Referring to FIG. 13, operation S2400 of encoding the point cloud data may further include, searching for a correlation with the at least one reference frame in the GOF based on a geometry context continue flag, and, based on the found correlation being greater than or equal to a threshold, performing arithmetic encoding on geometry data of the current frame based on a continued geometry context for the previous frame, or, based on the found correlation being less than the threshold, initializing the geometry context for the previous frame.

Referring to FIG. 14, operation S2400 of encoding the point cloud data may further include, searching for a correlation with the at least one reference frame in the GOF based on an attribute context continue flag, and, based on the found correlation being greater than or equal to a threshold, performing arithmetic encoding on attribute data of the current frame based on a continued attribute context for the previous frame, or, based on the found correlation being less than the threshold, initializing the attribute context for the previous frame.

Referring to FIGS. 18 to 24, the bitstream may contain at least one of a sequence parameter set, a tile parameter set, a geometry parameter set, an attribute parameter set, or a slice header. The at least one of the sequence parameter set, the tile parameter set, the geometry parameter set, the attribute parameter set, or the slice header may include context continuity-related information.

The transmission method of FIG. 24 may be performed by the transmission device of FIG. 1. A point cloud data transmission device may include an encoder configured to encode point cloud data, and a transmitter configured to transmit a bitstream containing the point cloud data.

FIG. 25 illustrates a method of decoding point cloud data according to embodiments.

The point cloud data reception method/device according to the embodiments (i.e., the reception device 10004, receiver 10005, point cloud video decoder 10006 in FIG. 1, the transmission 20002/decoding 20003/rendering 20004 in FIG. 2, the decoder in FIG. 7, the reception device in FIG. 9, the devices in FIG. 10, the GoF-based decoding in FIG. 11, the context-based decoding in FIGS. 12 to 15, and the decoders in FIGS. 17A and 17B) decodes the point cloud data as illustrated in FIG. 25.

S2500: The point cloud data reception method according to the embodiments may include receiving a bitstream containing point cloud data.

The receiving operation according to the embodiments includes receiving a bitstream containing point cloud data and a parameter set.

S2501: The point cloud data reception method according to the embodiments may further include decoding the point cloud data.

The decoding operation according to the embodiments may include the decoding operations of the reception device 10004, receiver 10005, point cloud video decoder 10006 in FIG. 1, the transmission 20002/decoding 20003/rendering 20004 in FIG. 2, the decoder in FIG. 7, the reception device in FIG. 9, and decode the point cloud data based on the operations of the GoF-based decoding in FIG. 11, the context-based decoding in FIGS. 12 to 15, and the decoders in FIGS. 17A and 17B. The method of FIG. 25 may follow the reverse process of the method of FIG. 24.

Operation S2501 of decoding the point cloud data may include decoding geometry data of the point cloud data and decoding attribute data of the point cloud data. The decoding of the geometry data may include performing arithmetic decoding on the geometry data based on a context. The decoding of the attribute data may include performing arithmetic decoding on the attribute data based on a context.

Operation S2501 of decoding the point cloud data may further include decoding the point cloud data based on a group of frames (GoF) including a current frame and at least one reference frame for the current frame, the current frame containing the point cloud data.

Operation S2501 of decoding the point cloud data may include, based on a first value of a context continue flag, initializing an entropy context and performing arithmetic decoding on the point cloud data, or, based on a second value of the context continue flag, performing arithmetic decoding on the point cloud data without initializing the entropy context. The first value of the context continue flag may indicate that a continued context of a previous frame is not used for encoding of the point cloud data in a current frame, and the second value may indicate that the continued context of the previous frame is used for the encoding of the point cloud data in the current frame.

In operation S2500 of receiving a bitstream containing the point cloud data, the bitstream may contain at least one of a sequence parameter set, a tile parameter set, a geometry parameter set, an attribute parameter set, or a slice header, wherein the at least one of the sequence parameter set, the tile parameter set, the geometry parameter set, the attribute parameter set, or the slice header may include context continuity-related information.

The method of FIG. 25 may be performed by the reception device of FIG. 1. The point cloud data reception device may include a receiver configured to receive a bitstream containing point cloud data, and a decoder configured to decode the point cloud data.

The PCC encoding method, PCC decoding method, and signaling method according to the above-described embodiments may provide the following effects.

In the embodiments, the geometry and attribute compression performance may be enhanced. Also, by removing redundant information between highly correlated frames to the maximum extent, the bitstream may be efficiently configured. By signaling the applicable range for each of geometry and attributes, optimal compression efficiency may be achieved. Also, since a probability model is not initialized for every frame, memory usage and computation time may be reduced.

The embodiments support a method of dividing 3D map data captured by LiDAR equipment and integrated into a single piece of content into slices to apply an angular mode for supporting efficient geometry compression of the data.

Accordingly, the embodiments may provide a method of dividing point cloud frames captured by LiDAR equipment into slices for efficient geometry compression of Geometry-based Point Cloud Compression (G-PCC) when the frames are integrated into a single piece of point cloud content, thereby improving geometry compression coding/-decoding efficiency.

The point cloud data transmission/reception method/device according to the embodiments may more efficiently compress and reconstruct point cloud data based on operations of partitioning the point cloud data captured by LiDAR equipment according to a 3D map and related signaling information.

Therefore, the transmission method/device according to the embodiments may efficiently compress and transmit point cloud data, and deliver signaling information for the same, and the reception method/device according to the embodiments may also efficiently decode and reconstruct the point cloud data.

The operations of the transmission/reception device according to the above-described embodiments may be described in conjunction with the following point cloud compression processing procedure.

The embodiments have been described in terms of a method and/or a device, and the description of the method and the description of the device may be applied complementary to each other.

Although the accompanying drawings have been described separately for simplicity, it is possible to design new embodiments by combining the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In the present disclosure, "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to perform the related operation or interpret the related definition according to a specific condition when the specific condition is satisfied.

Operations according to the embodiments described in this specification may be performed by a transmission/-reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

[Mode for Disclosure]

As described above, related details have been described in the best mode for carrying out the embodiments.

[Industrial Applicability]

As described above, the embodiments are fully or partially applicable to a point cloud data transmission/reception device and system.

Those skilled in the art may change or modify the embodiments in various ways within the scope of the embodiments.

Embodiments may include variations/modifications within the scope of the claims and their equivalents.

## Claims

1. A method of transmitting point cloud data, the method comprising:

    encoding point cloud data; and
    transmitting a bitstream containing the point cloud data.

2. The method of claim 1, wherein the encoding of the point cloud data comprises:

    encoding geometry data of the point cloud data, and
    encoding attribute data of the point cloud data,
    wherein the encoding of the geometry data comprises:

        determining continuity of a context for the geometry data; and
        performing arithmetic encoding on the geometry data based on the context,
        wherein the encoding of the attribute data comprises:

            determining continuity of a context for the attribute data; and
            performing arithmetic encoding on the attribute data based on the context.

3. The method of claim 1, wherein the encoding of the point cloud data comprises:
encoding the point cloud data based on a group of frames (GoF) including a current frame and at least one reference frame for the current frame, the current frame containing the point cloud data.

4. The method of claim 3, wherein the encoding of the point cloud data further comprises:
performing arithmetic encoding on the point cloud data based on a correlation with the at least one reference frame in the GoF without initializing a context.

5. The method of claim 3, wherein the encoding of the point cloud data further comprises:

    based on a first value of a context continue flag, initializing an entropy context and performing arithmetic encoding on the point cloud data; or
    based on a second value of the context continue flag, performing arithmetic encoding on the point cloud data without initializing the entropy context,
    wherein:

        the first value of the context continue flag indicates that a continued context of a previous frame is not used for the encoding of the point cloud data in the current frame; and
        the second value indicates that the continued context of the previous frame is used for the encoding of the point cloud data in the current frame.

6. The method of claim 3, wherein the encoding of the point cloud data further comprises:

    searching for a correlation with the at least one reference frame in the GOF based on a geometry context continue flag; and
    performing one of:

        based on the found correlation being greater than or equal to a threshold; performing arithmetic encoding on geometry data of the current frame based on a continued geometry context for the previous frame; or
        based on the found correlation being less than the threshold, initializing the geometry context for the previous frame.

**7.** The method of claim 3, wherein the encoding of the point cloud data further comprises:

searching for a correlation with the at least one reference frame in the GOF based on an attribute context continue flag; and
performing one of:

based on the found correlation being greater than or equal to a threshold; performing arithmetic encoding on attribute data of the current frame based on a continued attribute context for the previous frame; or
based on the found correlation being less than the threshold, initializing the attribute context for the previous frame.

**8.** The method of claim 1, wherein the bitstream contains at least one of a sequence parameter set, a tile parameter set, a geometry parameter set, an attribute parameter set, or a slice header,
wherein the at least one of the sequence parameter set, the tile parameter set, the geometry parameter set, the attribute parameter set, or the slice header comprises context continuity-related information.

**9.** A device for transmitting point cloud data, comprising:

an encoder configured to encode point cloud data; and
a transmitter configured to transmit a bitstream containing the point cloud data.

**10.** A method of receiving point cloud data, comprising:

receiving a bitstream containing point cloud data; and
decoding the point cloud data.

**11.** The method of claim 10, wherein the decoding of the point cloud data comprises:

decoding geometry data of the point cloud data; and
decoding attribute data of the point cloud data,
wherein the decoding of the geometry data comprises:

performing arithmetic decoding on the geometry data based on a context,
wherein the decoding of the attribute data comprises:
performing arithmetic decoding on the attribute data based on a context.

**12.** The method of claim 10, wherein the decoding of the point cloud data comprises:
decoding the point cloud data based on a group of frames (GoF) including a current frame and at least one reference frame for the current frame, the current frame containing the point cloud data.

**13.** The method of claim 11, wherein the decoding of the point cloud data further comprises:

based on a first value of a context continue flag, initializing an entropy context and performing arithmetic decoding on the point cloud data; or
based on a second value of the context continue flag, performing arithmetic decoding on the point cloud data without initializing the entropy context,
wherein:

the first value of the context continue flag indicates that a continued context of a previous frame is not used for encoding of the point cloud data in a current frame; and
the second value indicates that the continued context of the previous frame is used for the encoding of the point cloud data in the current frame.

**14.** The method of claim 10, wherein the bitstream contains at least one of a sequence parameter set, a tile parameter set, a geometry parameter set, an attribute parameter set, or a slice header,
wherein the at least one of the sequence parameter set, the tile parameter set, the geometry parameter set, the attribute parameter set, or the slice header comprises context continuity-related information.

**15.** A device for receiving point cloud data, comprising:

a receiver configured to receive a bitstream containing point cloud data; and
a decoder configured to decode the point cloud data.

FIG. 1

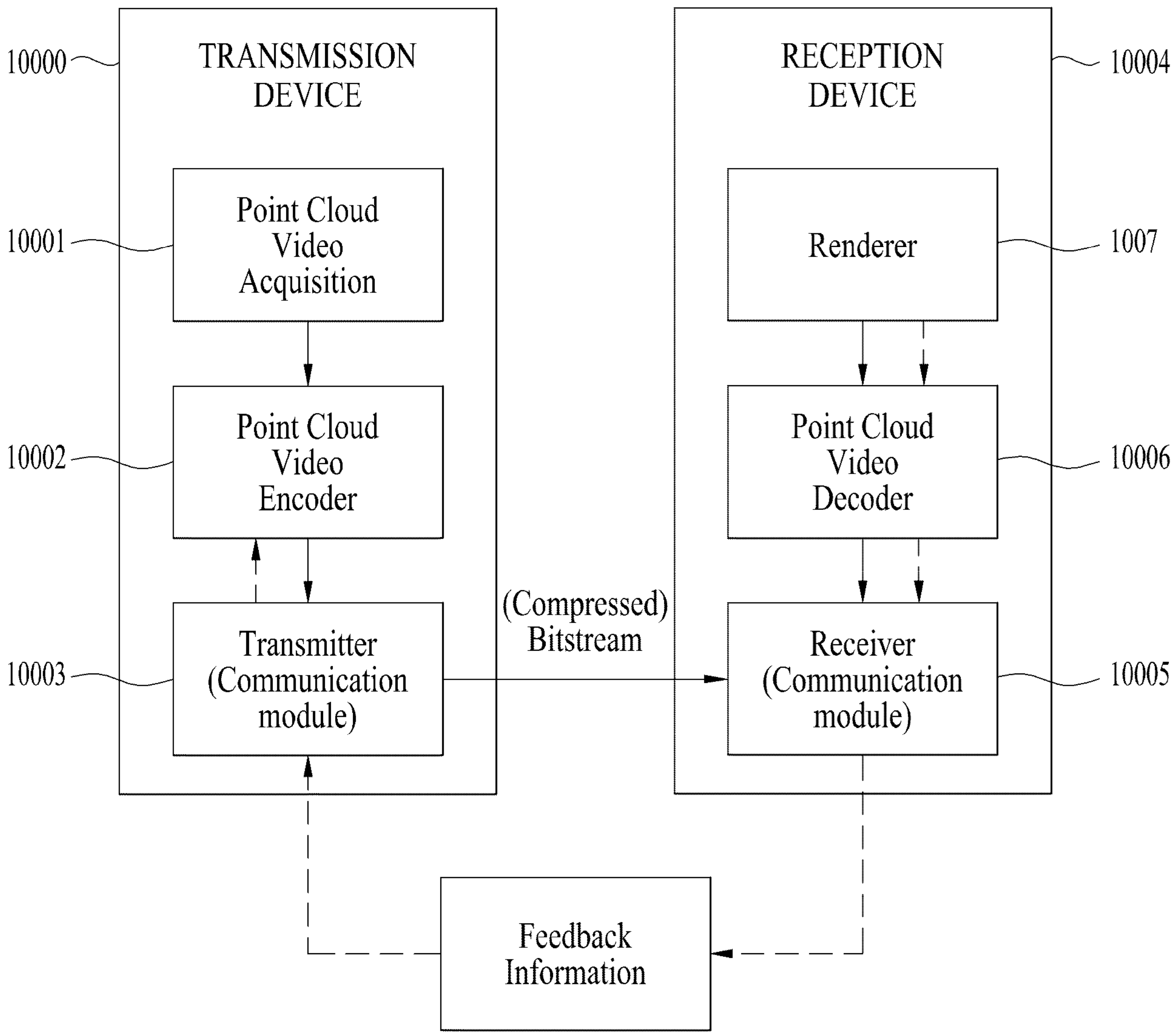
TRANSMISSION DEVICE
10000
Point Cloud Video Acquisition
10001
Point Cloud Video Encoder
10002
Transmitter (Communication module)
10003
(Compressed) Bitstream
RECEPTION DEVICE
10004
Renderer
1007
Point Cloud Video Decoder
10006
Receiver (Communication module)
10005
Feedback Information

FIG. 2

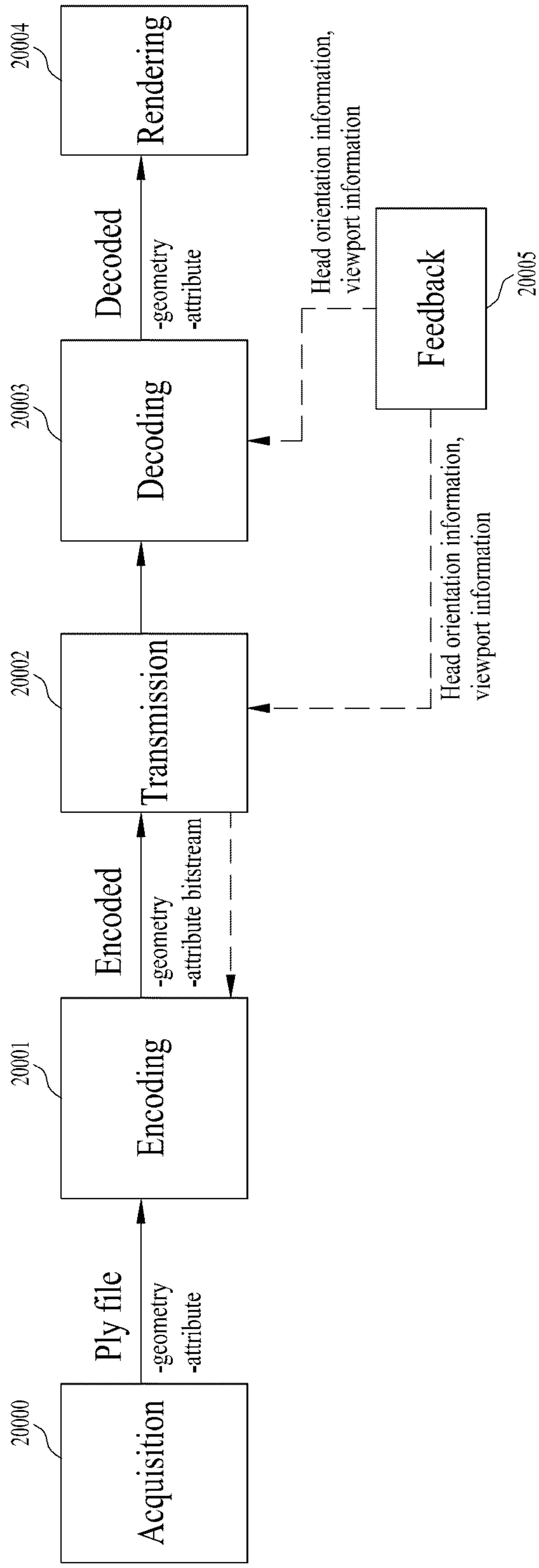
20000
Acquisition
Ply file
-geometry
-attribute
20001
Encoding
Encoded
-geometry
-attribute bitstream
20002
Transmission
20003
Decoding
Decoded
-geometry
-attribute
20004
Rendering
20005
Feedback
Head orientation information,
viewport information
Head orientation information,
viewport information

FIG. 3

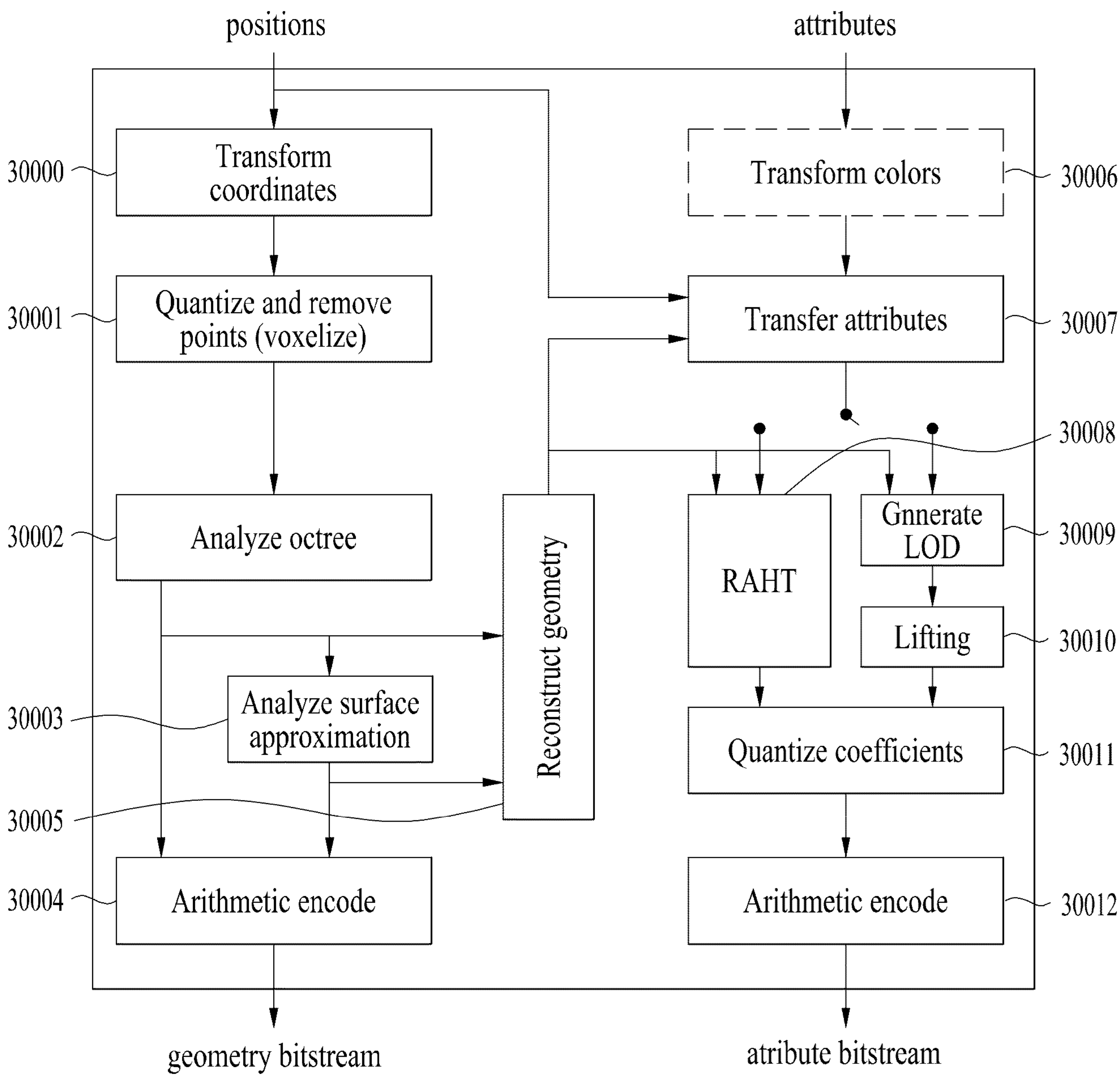
positions
attributes
30000
Transform coordinates
30001
Quantize and remove points (voxelize)
30002
Analyze octree
30003
Analyze surface approximation
30005
30004
Arithmetic encode
Reconstruct geometry
Transform colors
30006
Transfer attributes
30007
30008
RAHT
Gnnerate LOD
30009
Lifting
30010
Quantize coefficients
30011
Arithmetic encode
30012
geometry bitstream
atribute bitstream

FIG. 4

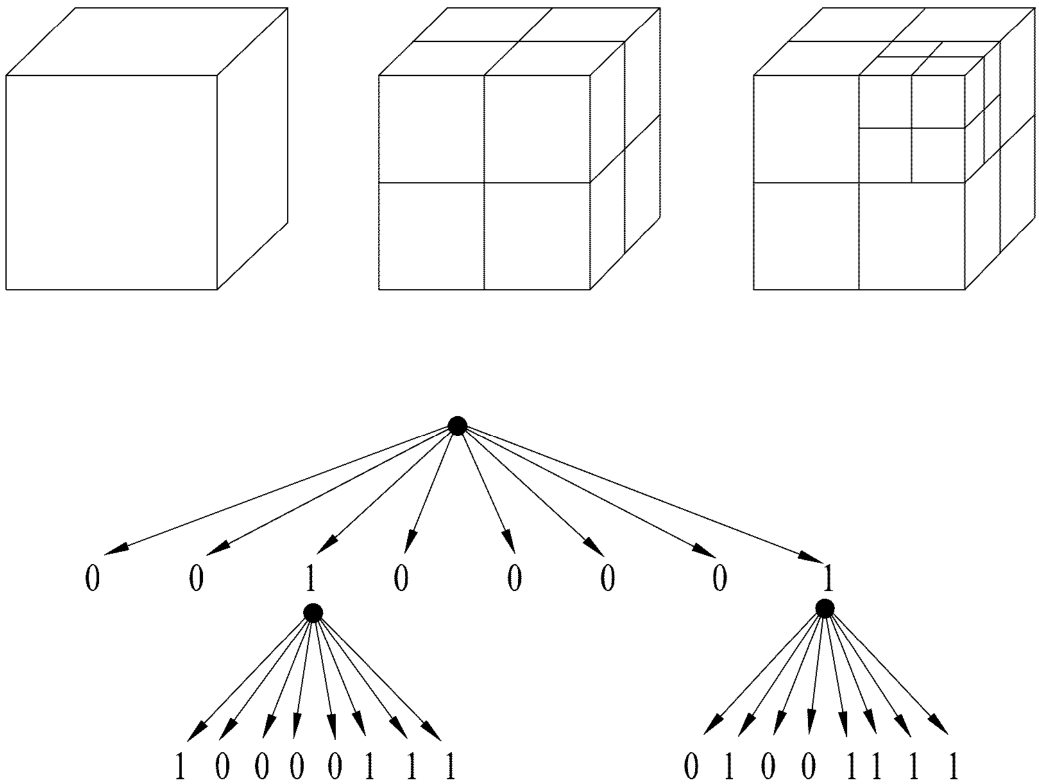

FIG. 5

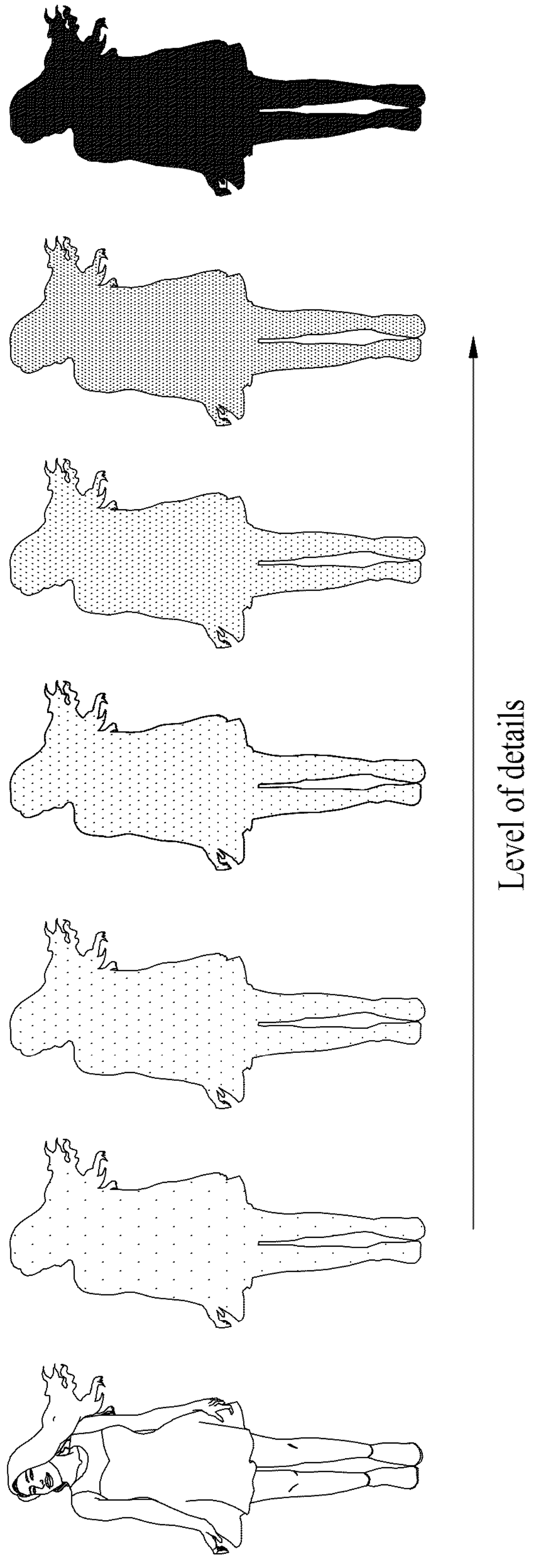

FIG. 6

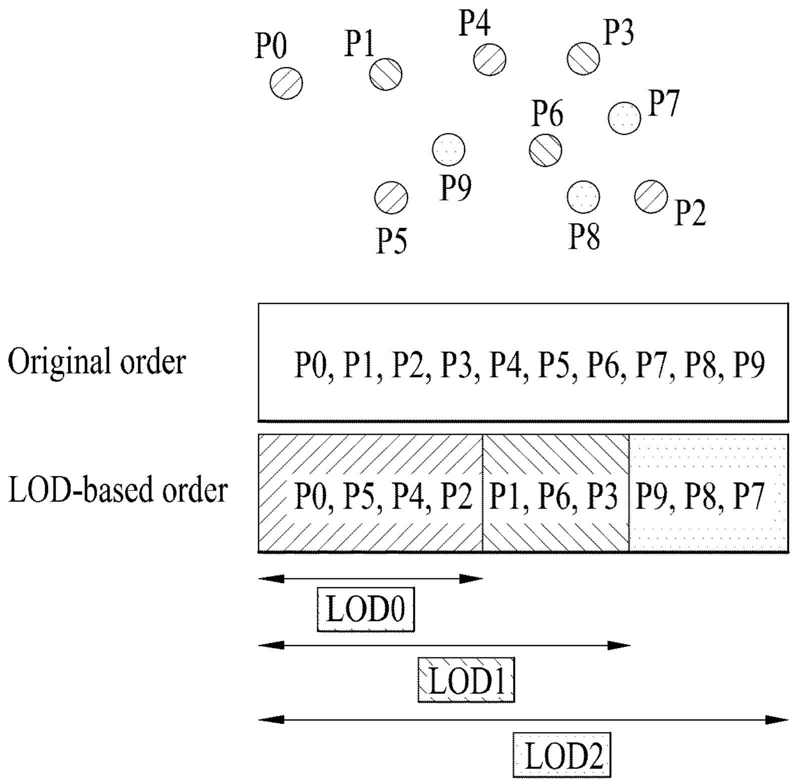
P0
P1
P4
P3
P6
P7
P9
P5
P8
P2
Original order
P0, P1, P2, P3, P4, P5, P6, P7, P8, P9
LOD-based order
P0, P5, P4, P2
P1, P6, P3
P9, P8, P7
LOD0
LOD1
LOD2

FIG. 7

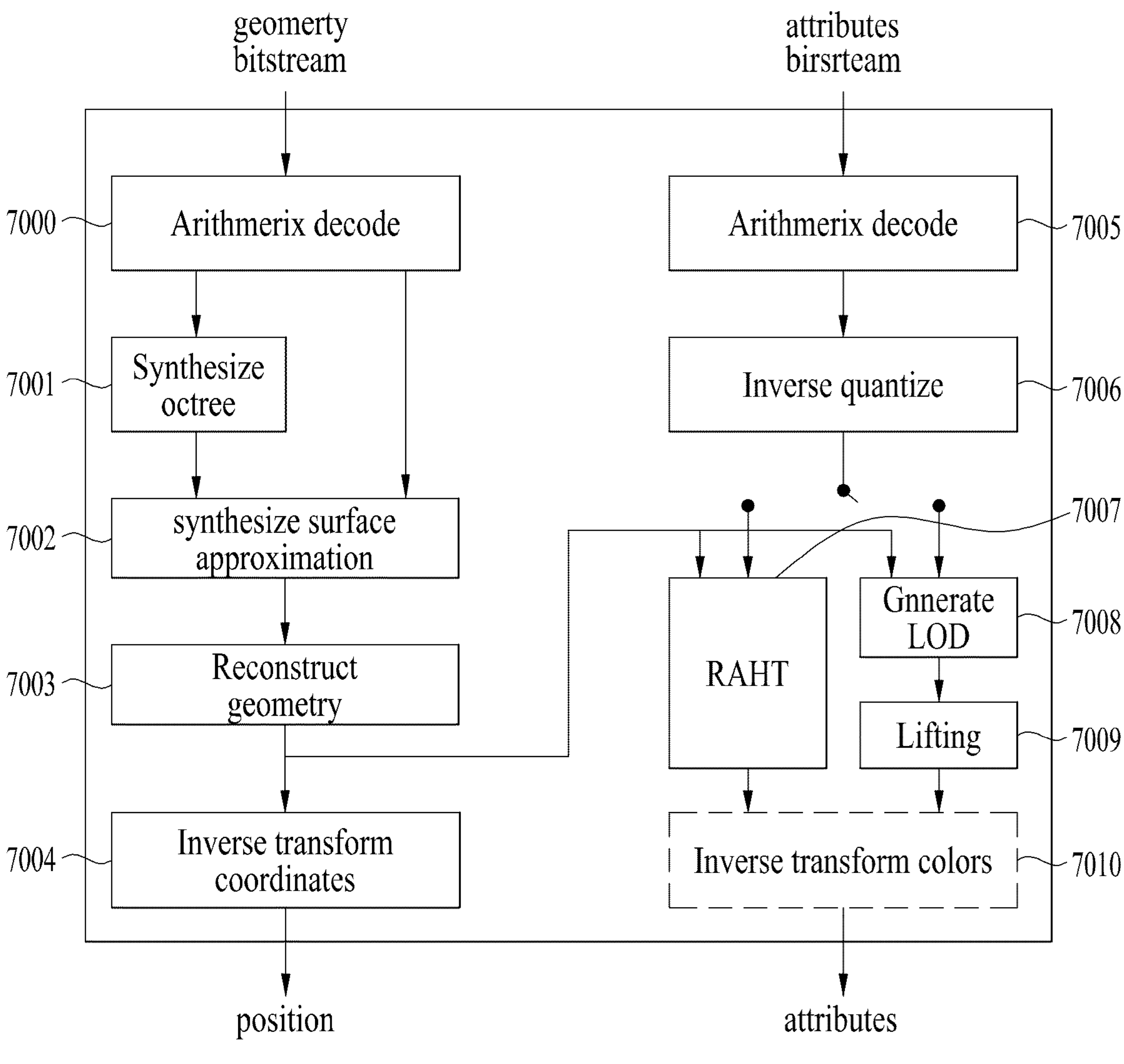
geomerty
bitstream
attributes
birsrteam
7000
Arithmerix decode
Arithmerix decode
7005
7001
Synthesize
octree
Inverse quantize
7006
7007
7002
synthesize surface
approximation
Gnnerate
LOD
7008
RAHT
7003
Reconstruct
geometry
Lifting
7009
7004
Inverse transform
coordinates
Inverse transform colors
7010
position
attributes

FIG. 8

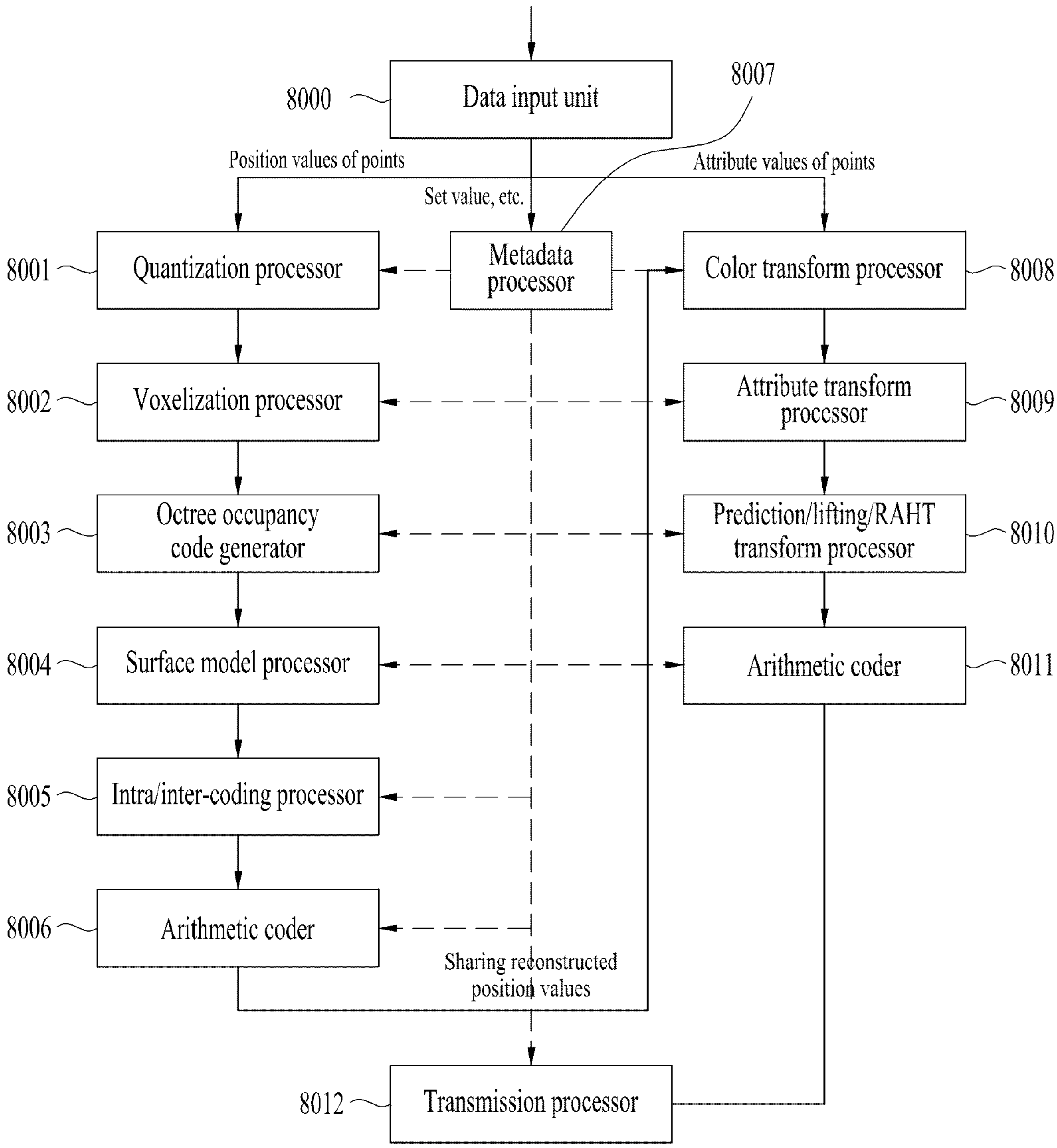
Data input unit
8000
8007
Position values of points
Attribute values of points
Set value, etc.
Quantization processor
8001
Metadata processor
Color transform processor
8008
Voxelization processor
8002
Attribute transform processor
8009
Octree occupancy code generator
8003
Prediction/lifting/RAHT transform processor
8010
Surface model processor
8004
Arithmetic coder
8011
Intra/inter-coding processor
8005
Arithmetic coder
8006
Sharing reconstructed position values
Transmission processor
8012

FIG. 9

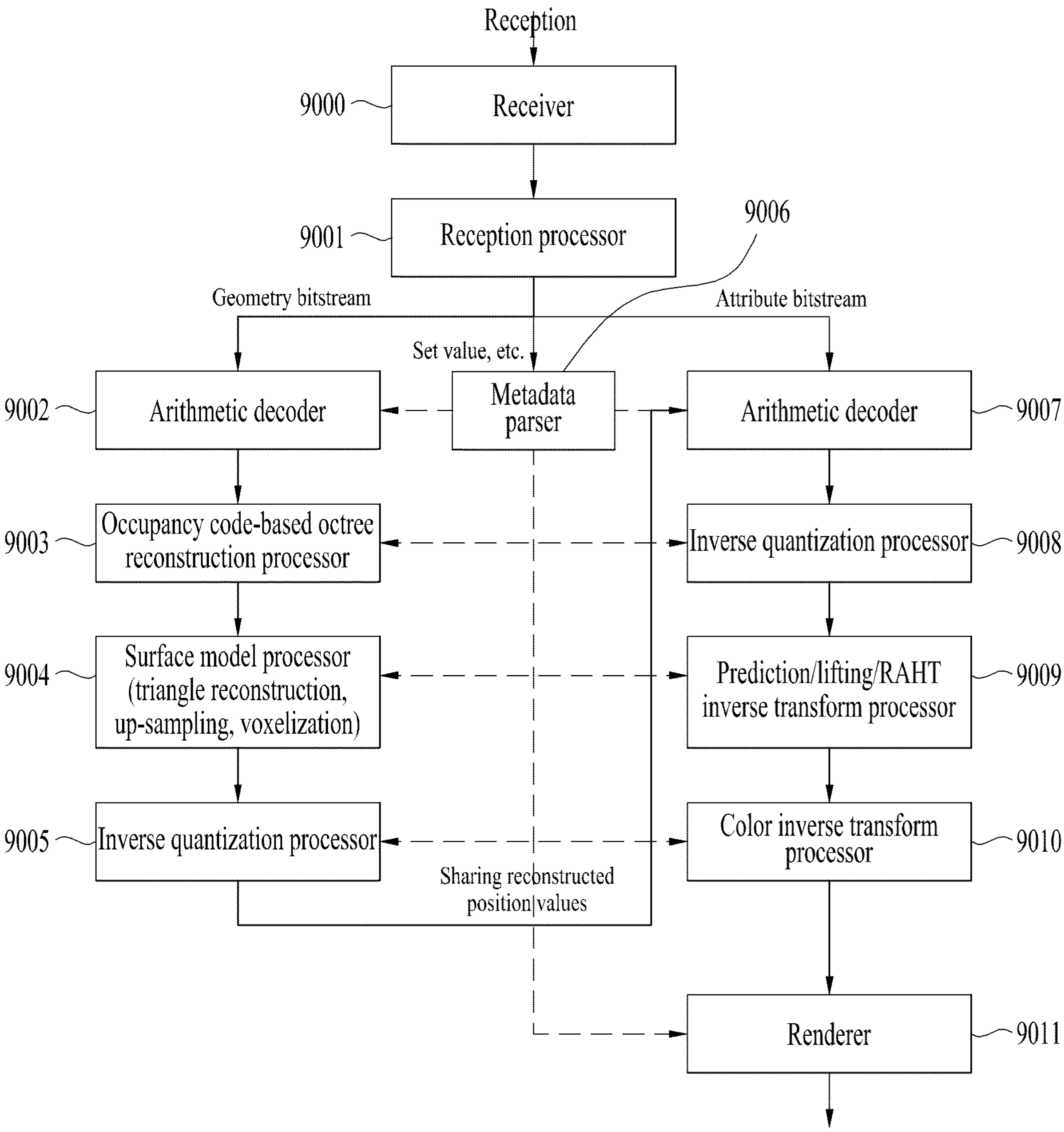
Reception
9000
Receiver
9001
Reception processor
9006
Geometry bitstream
Attribute bitstream
Set value, etc.
9002
Arithmetic decoder
Metadata parser
Arithmetic decoder
9007
9003
Occupancy code-based octree reconstruction processor
Inverse quantization processor
9008
9004
Surface model processor (triangle reconstruction, up-sampling, voxelization)
Prediction/lifting/RAHT inverse transform processor
9009
9005
Inverse quantization processor
Color inverse transform processor
9010
Sharing reconstructed position values
Renderer
9011

FIG. 10

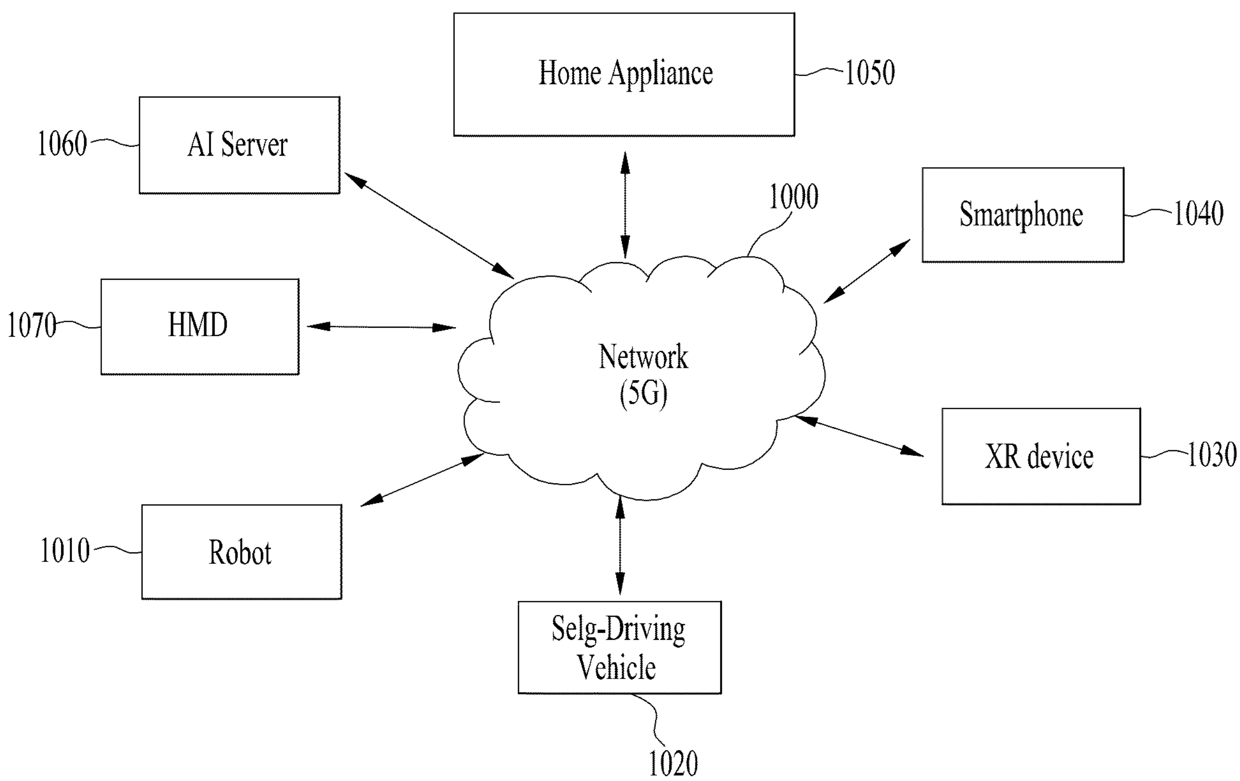
Home Appliance
1050
1060
AI Server
1000
Smartphone
1040
1070
HMD
Network
(5G)
XR device
1030
1010
Robot
Selg-Driving
Vehicle
1020

FIG. 11

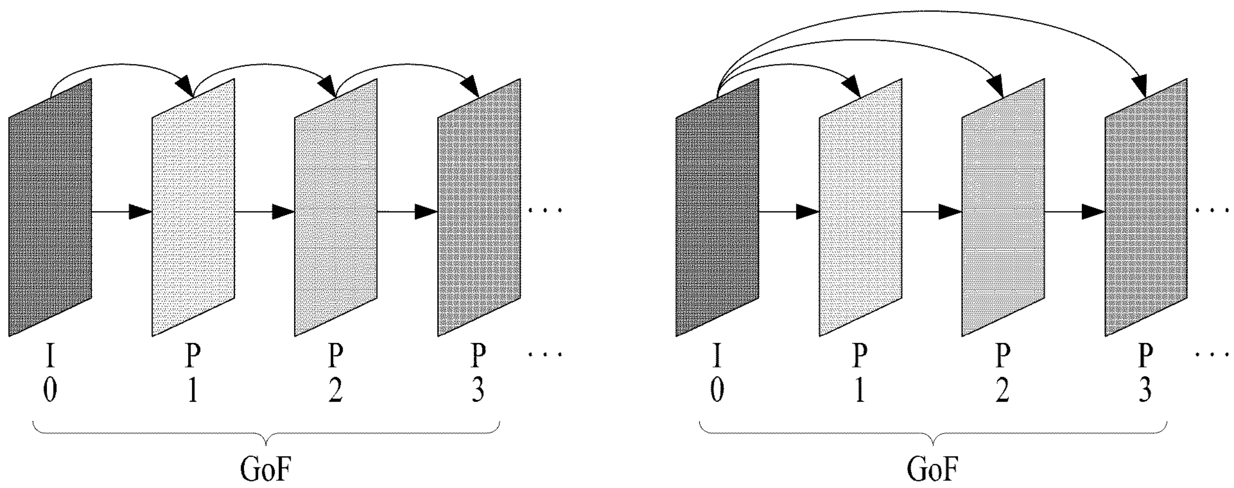

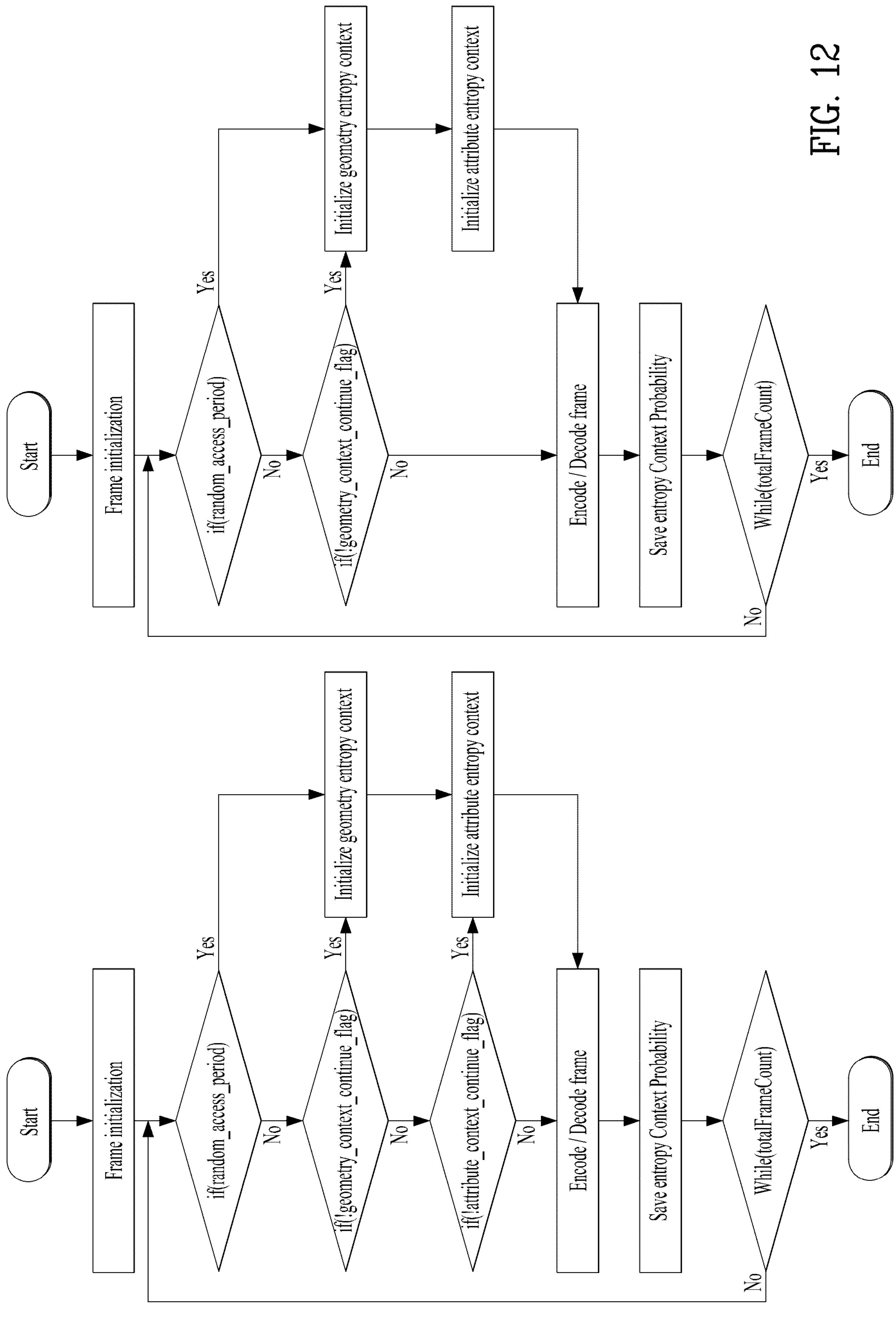
Start
Frame initialization
if(random_access_period)
Yes
No
if(!geometry_context_continue_flag)
Yes
No
Initialize geometry entropy context
Initialize attribute entropy context
Encode / Decode frame
Save entropy Context Probability
While(totalFrameCount)
Yes
No
End
Start
Frame initialization
if(random_access_period)
Yes
No
if(!geometry_context_continue_flag)
Yes
No
if(!attribute_context_continue_flag)
Yes
No
Initialize geometry entropy context
Initialize attribute entropy context
Encode / Decode frame
Save entropy Context Probability
While(totalFrameCount)
Yes
No
End

FIG. 12

FIG. 13

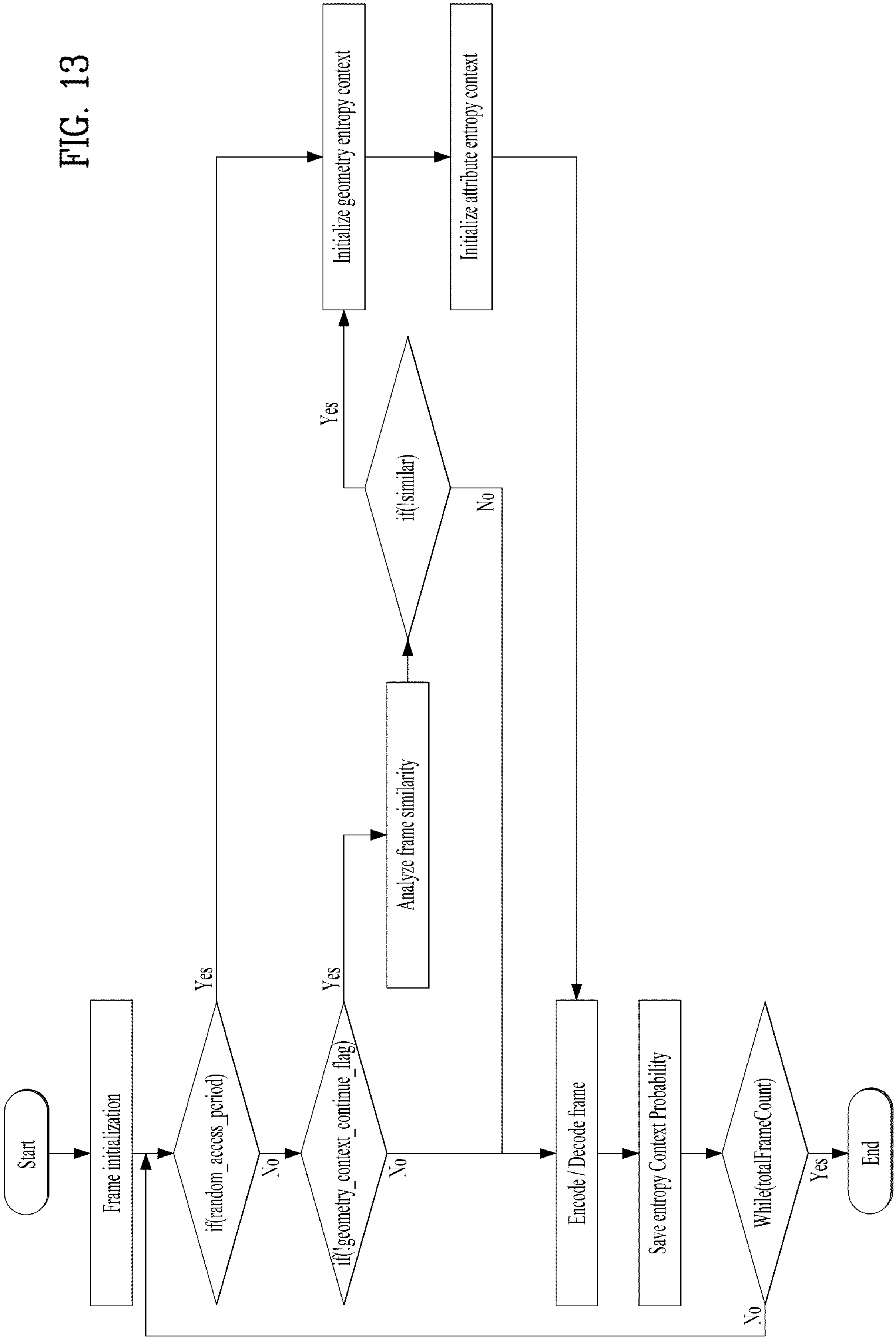
Start
Frame initialization
if(random_access_period)
Yes
No
if(!geometry_context_continue_flag)
Yes
No
Analyze frame similarity
if(!similar)
Yes
No
Initialize geometry entropy context
Initialize attribute entropy context
Encode / Decode frame
Save entropy Context Probability
While(totalFrameCount)
Yes
No
End

FIG. 14

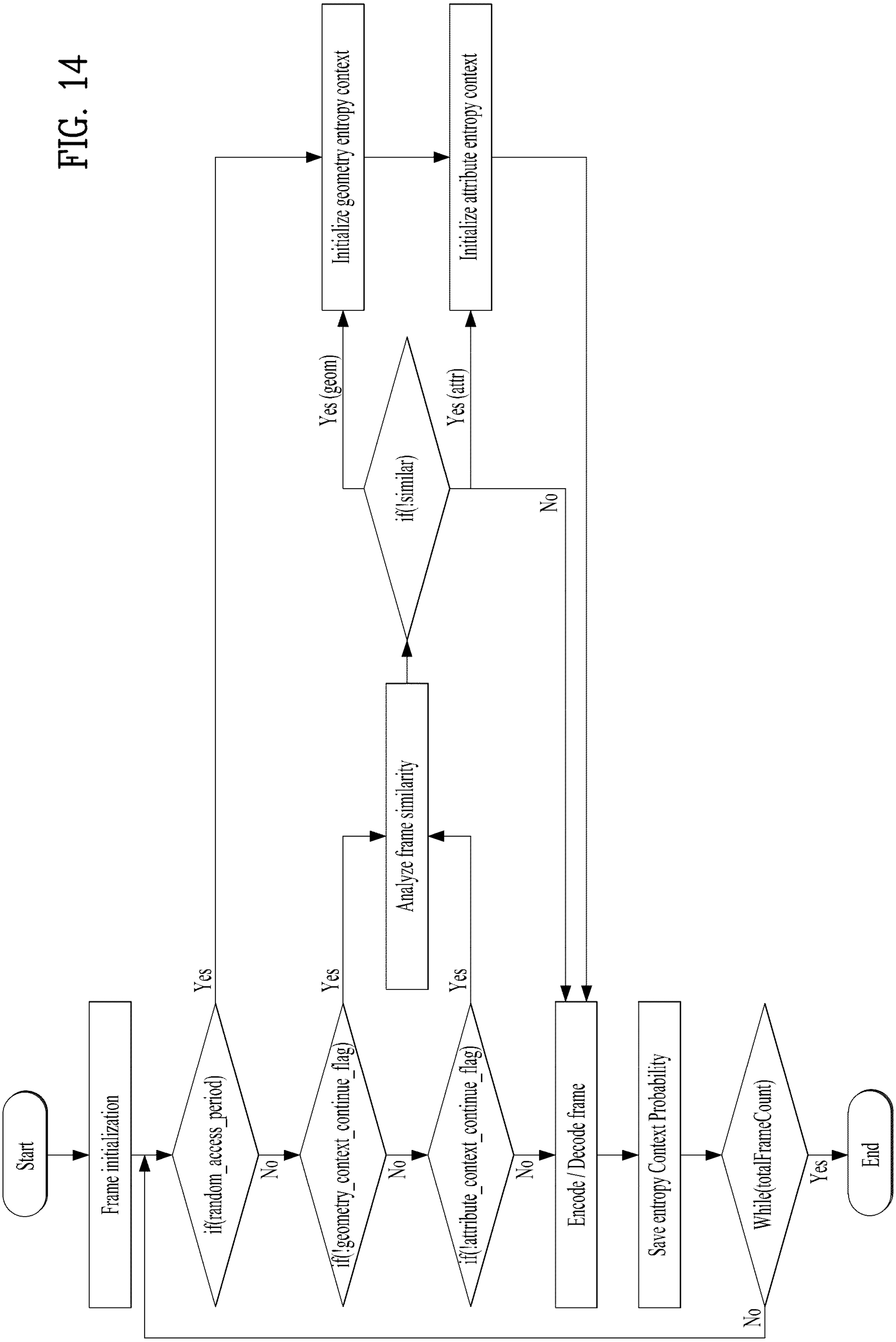
Start
Frame initialization
if(random_access_period)
Yes
No
if(!geometry_context_continue_flag)
Yes
No
if(!attribute_context_continue_flag)
Yes
No
Analyze frame similarity
if(!similar)
Yes (geom)
Yes (attr)
No
Initialize geometry entropy context
Initialize attribute entropy context
Encode / Decode frame
Save entropy Context Probability
While(totalFrameCount)
Yes
No
End

FIG. 15

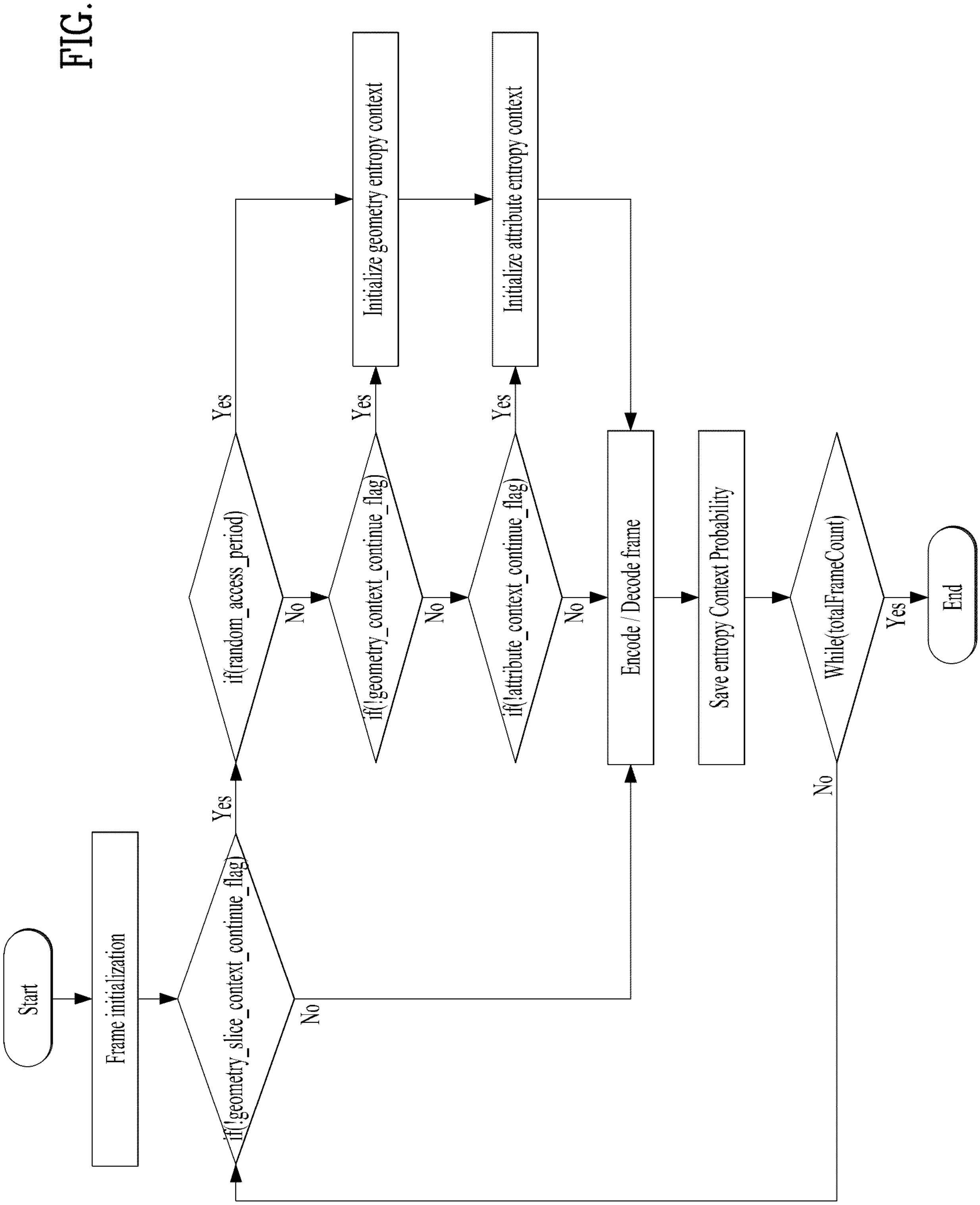
Start
Frame initialization
if(!geometry_slice_context_continue_flag)
Yes
No
if(random_access_period)
Yes
No
Initialize geometry entropy context
if(!geometry_context_continue_flag)
Yes
No
Initialize attribute entropy context
if(!attribute_context_continue_flag)
Yes
No
Encode / Decode frame
Save entropy Context Probability
While(totalFrameCount)
Yes
No
End

FIG. 16a

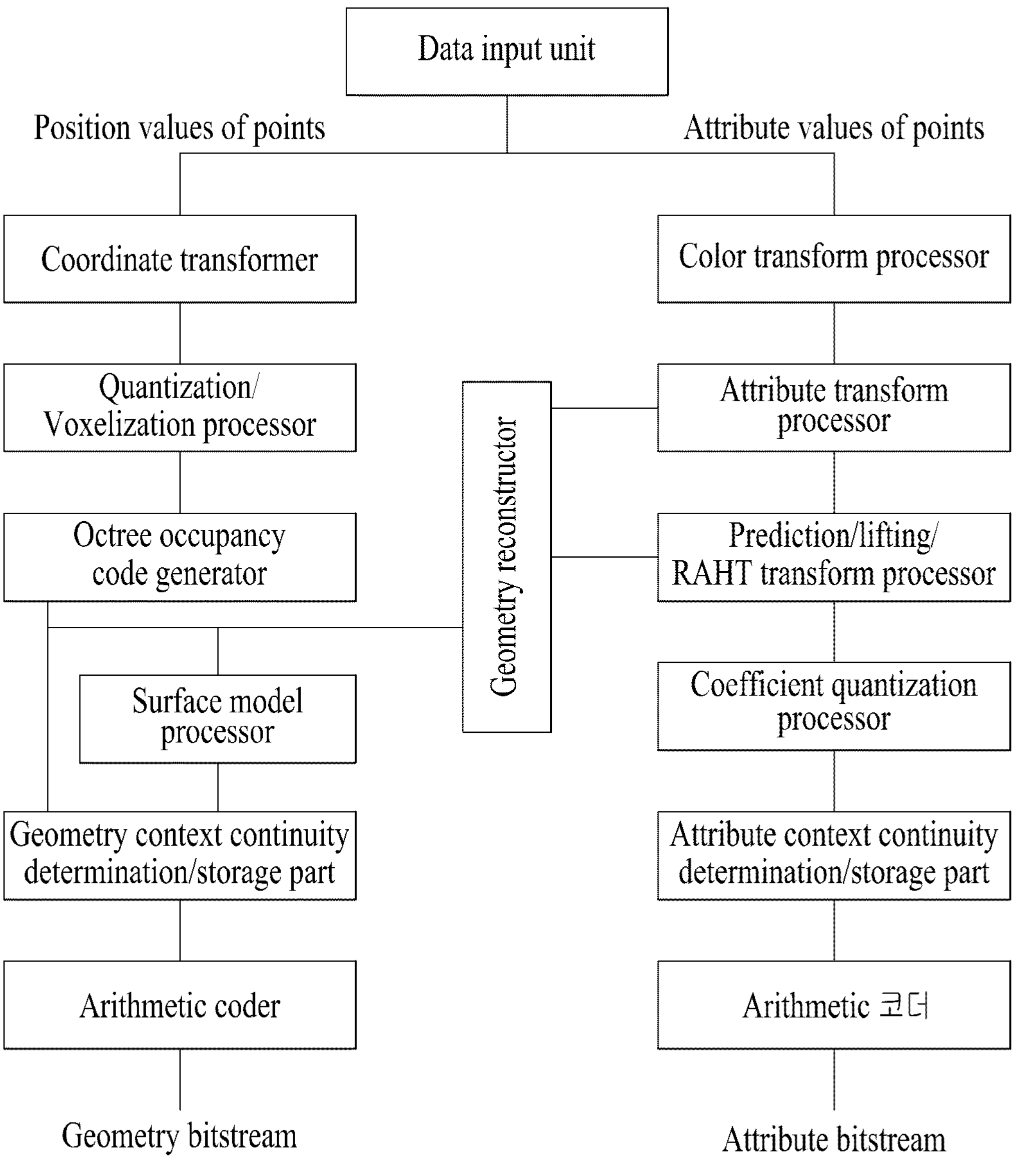
Data input unit
Position values of points
Attribute values of points
Coordinate transformer
Color transform processor
Quantization/
Voxelization processor
Geometry reconstructor
Attribute transform
processor
Octree occupancy
code generator
Prediction/lifting/
RAHT transform processor
Surface model
processor
Coefficient quantization
processor
Geometry context continuity
determination/storage part
Attribute context continuity
determination/storage part
Arithmetic coder
Arithmetic 코더
Geometry bitstream
Attribute bitstream

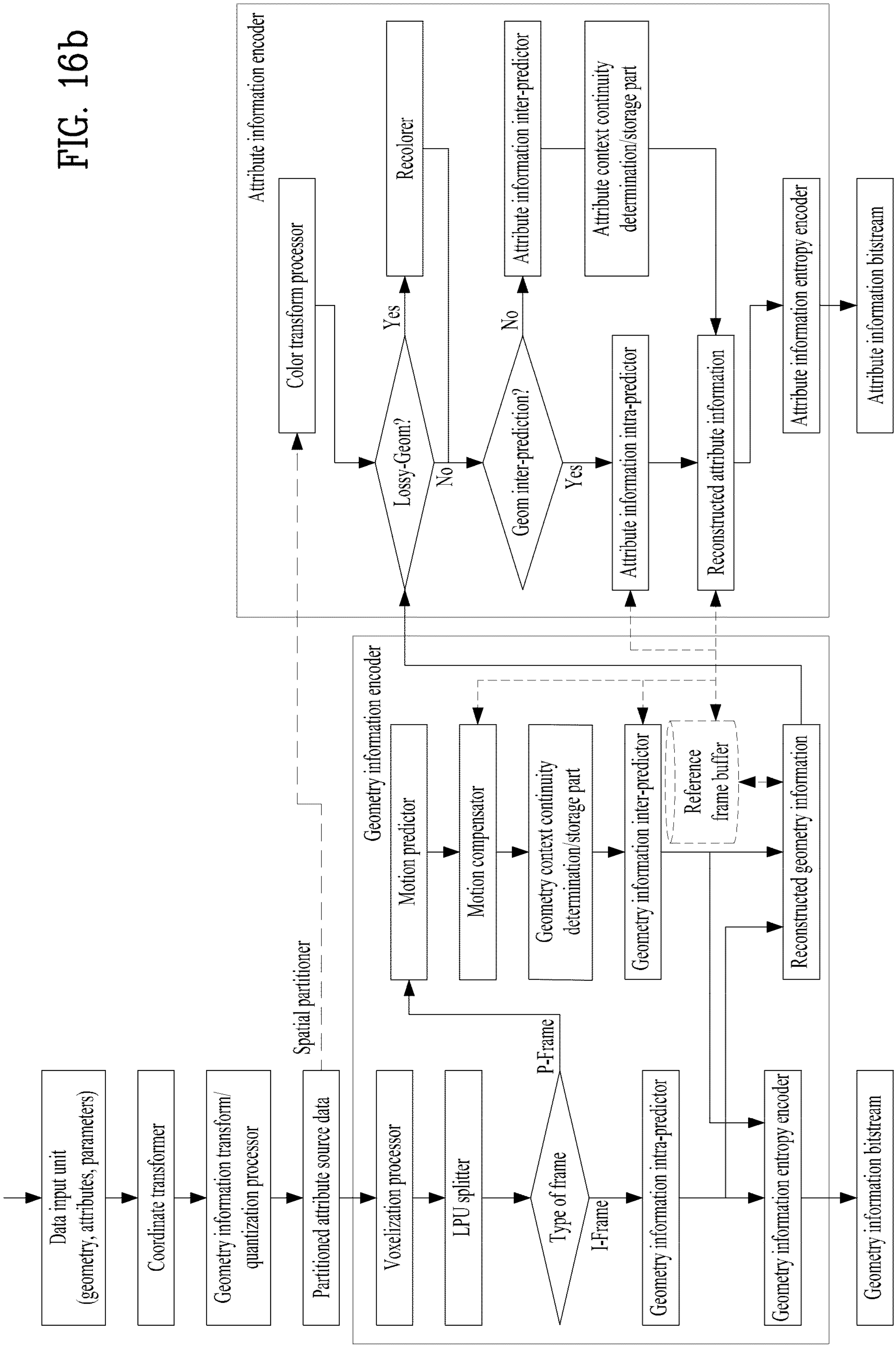
Data input unit
(geometry, attributes, parameters)
Coordinate transformer
Geometry information transform/
quantization processor
Partitioned attribute source data
Spatial partitioner
Voxelization processor
LPU splitter
Type of frame
P-Frame
I-Frame
Geometry information intra-predictor
Geometry information entropy encoder
Geometry information bitstream
Geometry information encoder
Motion predictor
Motion compensator
Geometry context continuity
determination/storage part
Geometry information inter-predictor
Reference
frame buffer
Reconstructed geometry information
Attribute information encoder
Color transform processor
Lossy-Geom?
Yes
No
Recolorer
Geom inter-prediction?
No
Yes
Attribute information inter-predictor
Attribute context continuity
determination/storage part
Attribute information intra-predictor
Reconstructed attribute information
Attribute information entropy encoder
Attribute information bitstream

FIG. 16b

FIG. 17a

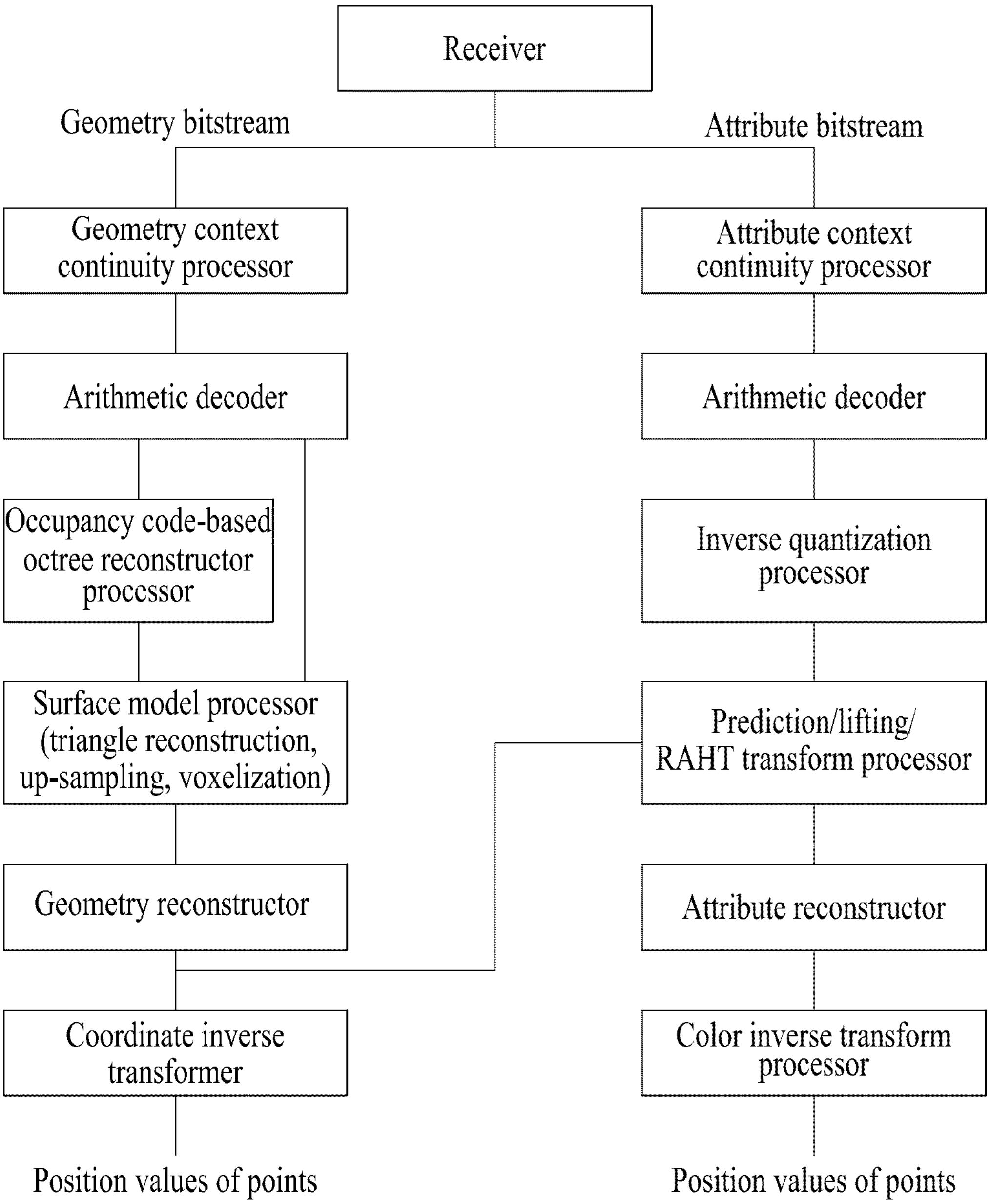
Receiver
Geometry bitstream
Attribute bitstream
Geometry context continuity processor
Attribute context continuity processor
Arithmetic decoder
Arithmetic decoder
Occupancy code-based octree reconstructor processor
Inverse quantization processor
Surface model processor (triangle reconstruction, up-sampling, voxelization)
Prediction/lifting/ RAHT transform processor
Geometry reconstructor
Attribute reconstructor
Coordinate inverse transformer
Color inverse transform processor
Position values of points
Position values of points

FIG. 17b

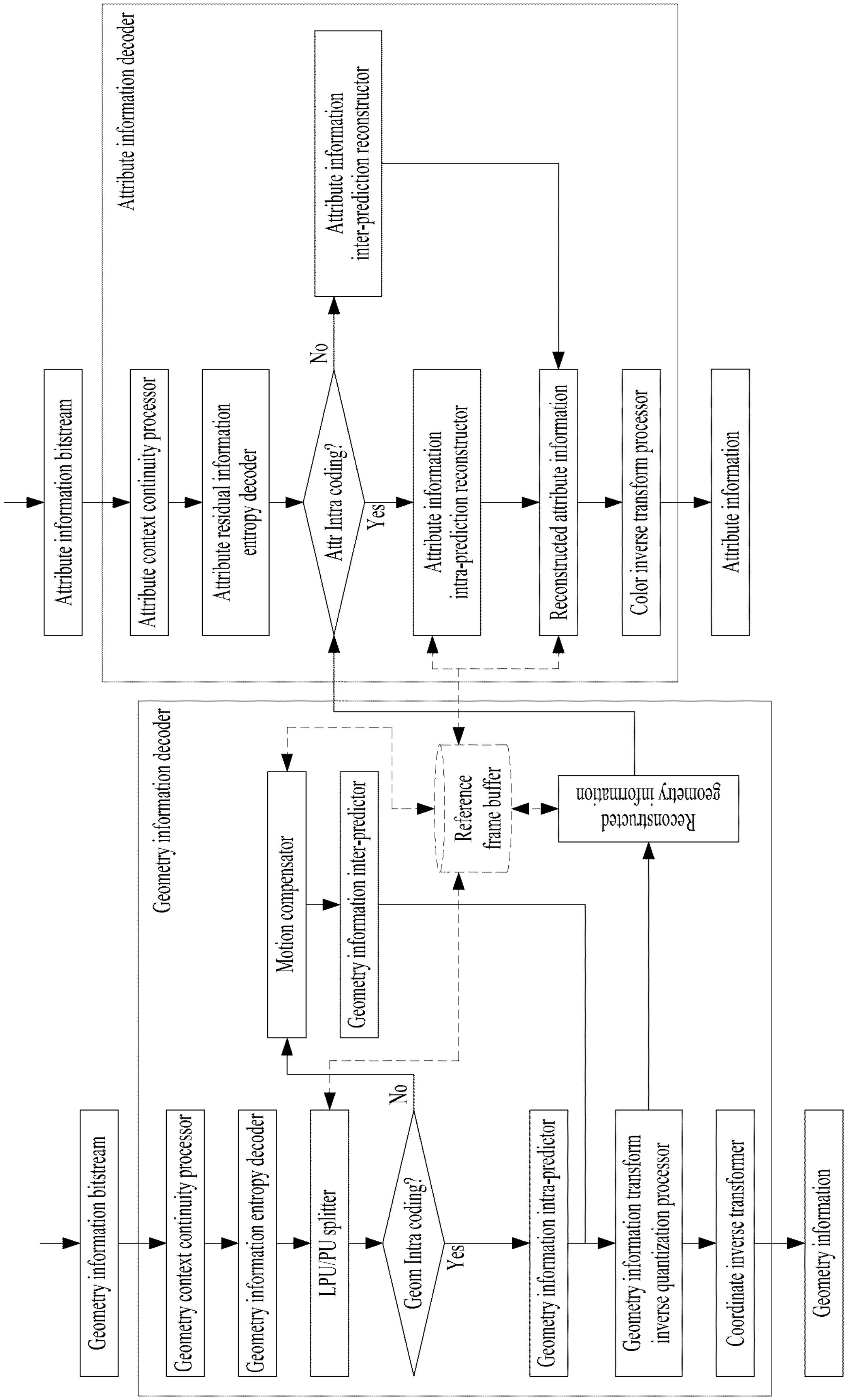
Attribute information decoder
Attribute information bitstream
Attribute context continuity processor
Attribute residual information entropy decoder
Attr Intra coding?
No
Yes
Attribute information inter-prediction reconstructor
Attribute information intra-prediction reconstructor
Reconstructed attribute information
Color inverse transform processor
Attribute information
Geometry information decoder
Geometry information bitstream
Geometry context continuity processor
Geometry information entropy decoder
LPU/PU splitter
Geom Intra coding?
No
Yes
Motion compensator
Geometry information inter-predictor
Reference frame buffer
Reconstructed geometry information
Geometry information intra-predictor
Geometry information transform inverse quantization processor
Coordinate inverse transformer
Geometry information

FIG. 18

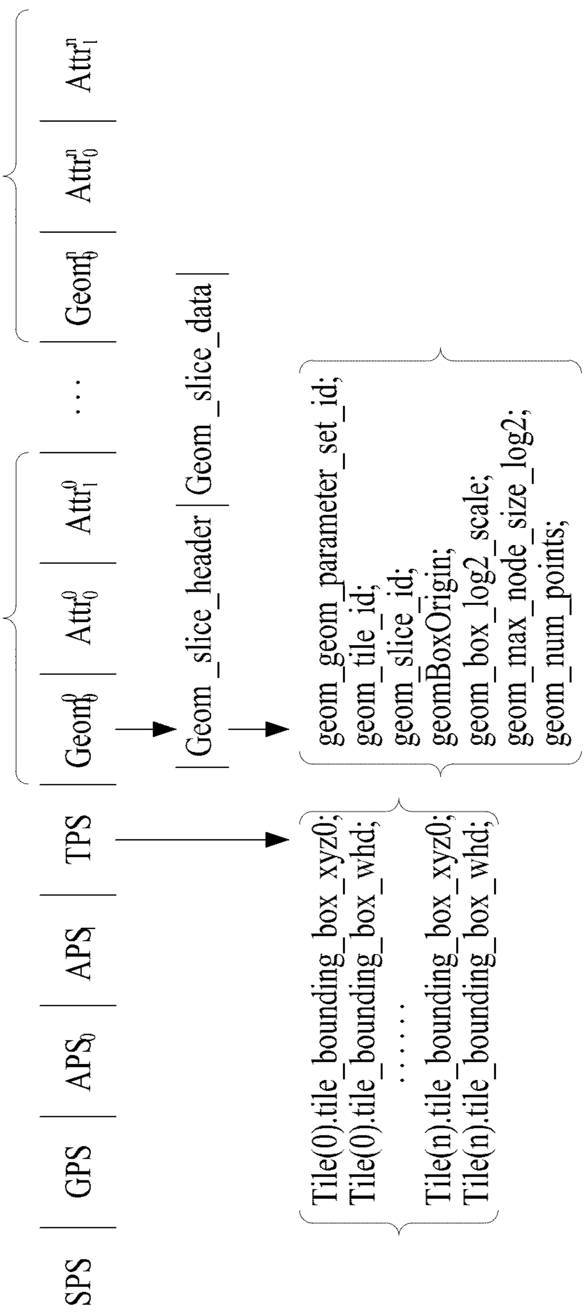

SPS
GPS
APS$_0$
APS$_1$
TPS
Slice 0
Geom$_0^0$
Attr$_0^0$
Attr$_1^0$
. . .
Slice n
Geom$_0^n$
Attr$_0^n$
Attr$_1^n$
Tile(0).tile_bounding_box_xyz0;
Tile(0).tile_bounding_box_whd;
. . . . . .
Tile(n).tile_bounding_box_xyz0;
Tile(n).tile_bounding_box_whd;
Geom _slice_header
Geom _slice_data
geom_geom_parameter_set_id;
geom_tile_id;
geom_slice_id;
geomBoxOrigin;
geom_box_log2_scale;
geom_max_node_size_log2;
geom_num_points;

FIG. 19

| sequence_parameter_set( ) { | Descriptor |
|---|---|
| ... | |
| frameIdx | ue(v) |
| context_continue_flag | u(1) |
| if(context_continue_flag) | |
| context_continue_use_frameIdx | ue(v) |
| ... | |
| byte_alignment( ) | |
| } | |

FIG. 20

| tile_parameter_set( ) { | Descriptor |
| --- | --- |
| ... | ue(v) |
| tile_ctr | ue(v) |
| tile_context_continue_flag | u(1) |
| if(tile_context_continue_flag) | |
| tile_context_continue_use_tileIdx | ue(v) |
| ... | |
| } | |

FIG. 21

| geometry_parameter_set( ) { | Descriptor |
| --- | --- |
| ... | |
| frameIdx | ue(v) |
| geomtry_context_continue_flag | u(1) |
| if(geometry_context_continue_flag) | |
| geometry_context_continue_use_frameIdx | ue(v) |
| ... | |
| } | |

FIG. 22

| attribute_parameter_set( ) { | Descriptor |
|---|---|
| ... | |
| frameIdx | ue(v) |
| attribute_context_continue_flag | u(1) |
| if(attribute_context_continue_flag) | |
| attribute_context_continue_use_frameIdx | ue(v) |
| ... | |
| } | |

FIG. 23

| geometry_slice_header( ) { | Descriptor |
| --- | --- |
| ... | |
| gsh_slice_id | ue(v) |
| geometry_slice_context_continue_flag | u(1) |
| if(geometry_slice_context_continue_flag) | |
| geometry_slice_context_continue_use_sliceIdx | ue(v) |
| ... | |
| } | |

FIG. 24

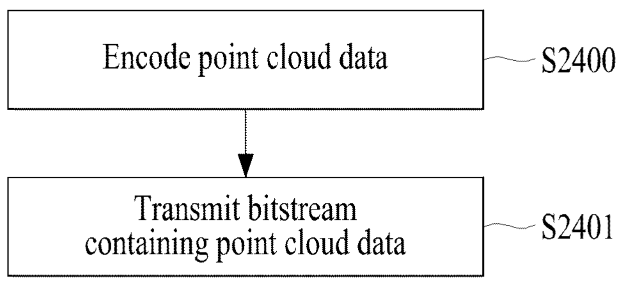
Encode point cloud data
S2400
Transmit bitstream containing point cloud data
S2401

FIG. 25

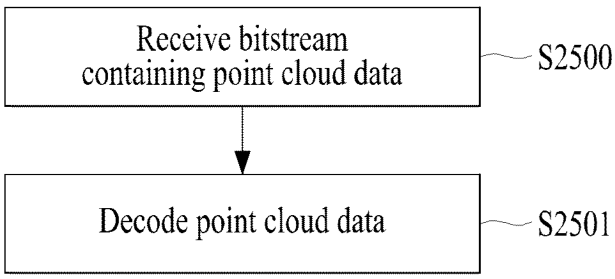
Receive bitstream containing point cloud data
S2500
Decode point cloud data
S2501

**INTERNATIONAL SEARCH REPORT**

International application No.
**PCT/KR2024/000470**

**A. CLASSIFICATION OF SUBJECT MATTER**

**H04N 19/573**(2014.01)i; **H04N 19/105**(2014.01)i; **H04N 19/114**(2014.01)i; **H04N 19/70**(2014.01)i; **H04N 19/597**(2014.01)i

According to International Patent Classification (IPC) or to both national classification and IPC

**B. FIELDS SEARCHED**

Minimum documentation searched (classification system followed by classification symbols)

H04N 19/573(2014.01); G06T 7/50(2017.01); G06T 9/00(2006.01); H04N 19/103(2014.01); H04N 19/44(2014.01); H04N 19/597(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포인트 클라우드(point cloud), 지오메트리(geometry), 어트리뷰트(attribute), 프레임 그룹(group of frames, GoF), 컨텍스트 연속성 플래그(context continue flag)

**C. DOCUMENTS CONSIDERED TO BE RELEVANT**

| Category* | Citation of document, with indication, where appropriate, of the relevant passages | Relevant to claim No. |
|---|---|---|
| X | KR 10-2021-0057161 A (HUAWEI TECHNOLOGIES CO., LTD.) 20 May 2021 (2021-05-20) See paragraphs [0036], [0049], [0066], [0080], [0116] and [0131]; and claims 1 and 10. | 1,3-4,9-12,15 |
| Y | | 8,14 |
| A | | 2,5-7,13 |
| Y | KR 10-2021-0144880 A (TENCENT AMERICA LLC) 30 November 2021 (2021-11-30) See paragraphs [0008] and [0151]. | 8,14 |
| A | KR 10-2022-0163951 A (QUALCOMM INCORPORATED) 12 December 2022 (2022-12-12) See paragraphs [0006]-[0007]. | 1-15 |
| A | KR 10-2317576 B1 (APPLE INC.) 25 October 2021 (2021-10-25) See paragraph [0019]. | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 April 2024** | **24 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2024/000470**

**C. DOCUMENTS CONSIDERED TO BE RELEVANT**

| Category* | Citation of document, with indication, where appropriate, of the relevant passages | Relevant to claim No. |
|---|---|---|
| A | KR 10-2256913 B1 (KOREA UNIVERSITY RESEARCH AND BUSINESS FOUNDATION) 27 May 2021 (2021-05-27)<br>See paragraph [0049]. | 1-15 |

Form PCT/ISA/210 (second sheet) (July 2022)

**INTERNATIONAL SEARCH REPORT**
**Information on patent family members**

International application No.
**PCT/KR2024/000470**

| Patent document cited in search report | Publication date (day/month/year) | Patent family member(s) | Publication date (day/month/year) |
|---|---|---|---|
| KR 10-2021-0057161 A | 20 May 2021 | CN 116847105 A | 03 October 2023 |
| | | EP 3844963 A1 | 07 July 2021 |
| | | EP 3844963 A4 | 10 November 2021 |
| | | JP 2023-123508 A | 05 September 2023 |
| | | JP 7130853 B2 | 05 September 2022 |
| | | KR 10-2608572 B1 | 04 December 2023 |
| | | US 2021-0203989 A1 | 01 July 2021 |
| | | WO 2020-055869 A1 | 19 March 2020 |
| KR 10-2021-0144880 A | 30 November 2021 | AU 246918 B2 | 02 March 2023 |
| | | CN 113796014 A | 14 December 2021 |
| | | CN 113796014 B | 03 November 2023 |
| | | EP 4128540 A1 | 08 February 2023 |
| | | EP 4128540 A4 | 22 November 2023 |
| | | JP 7330291 B2 | 21 August 2023 |
| | | US 11812058 B2 | 07 November 2023 |
| | | US 2022-0210472 A1 | 30 June 2022 |
| | | WO 2021-202003 A1 | 07 October 2021 |
| KR 10-2022-0163951 A | 12 December 2022 | CN 115211117 A | 18 October 2022 |
| | | EP 4133731 A1 | 15 February 2023 |
| | | US 2021-0314616 A1 | 07 October 2021 |
| | | WO 2021-207376 A1 | 14 October 2021 |
| KR 10-2317576 B1 | 25 October 2021 | CN 117319682 A | 29 December 2023 |
| | | KR 10-2020-0039757 A | 16 April 2020 |
| | | US 11935272 B2 | 19 March 2024 |
| | | US 2023-0099049 A1 | 30 March 2023 |
| | | WO 2019-055772 A1 | 21 March 2019 |
| KR 10-2256913 B1 | 27 May 2021 | KR 10-2020-0067112 A | 11 June 2020 |

Form PCT/ISA/210 (patent family annex) (July 2022)